# EUROPÄISCHE PATENTSCHRIFT

(11) **EP 3 833 987 B1**
(45) Veröffentlichungstag und Bekanntmachung des Hinweises auf die Patenterteilung: **01.05.2024**
(21) Anmeldenummer: 19782469.1
(22) Anmeldetag: 02.08.2019
(51) Int. Cl.: G01Q 60/22, G01J 3/02, G01Q 70/06, G02B 6/122, G02B 5/00

(54) **ANORDNUNG ZUR DETEKTION DER INTENSITAETSVERTEILUNG VON KOMPONENTEN DES ELEKTROMAGNETISCHEN FELDES IN STRAHLUNGSBUENDELN**
DEVICE FOR DETECTING THE DISTRIBUTION OF INTENSITIES OF THE COMPONENTS OF THE ELECTRIC FIELD IN A RADIATION BEAM
DISPOSITIF POUR LA DETECTIONS DE LA DISTRIBUTION DES INTENSITÉS DES COMPOSANTS DU CHAMP ÉLECTRIQUE D'UN FAISEAU DE RADIATION

(30) Priorität: 06.08.2018 DE 102018119096
(43) Veröffentlichungstag der Anmeldung: 16.06.2021
(73) Patentinhaber: Janunts, Norik, 07747 Jena (DE)
(72) Erfinder: Janunts, Norik, 07747 Jena (DE)
(74) Vertreter: Gleim Petri Patent- und Rechtsanwaltspartnerschaft mbB
(86) Internationale Anmeldenummer: PCT/DE2019/100706
(87) Internationale Veröffentlichungsnummer: WO 2020/030223

(56) Entgegenhaltungen:
- US-B2- 8 248 599
- VIKTOR GRUEV ET AL: "CCD polarization imaging sensor with aluminum nanowire optical filters References and links", OPTICS EXPRESS, Bd. 18, Nr. 18, 30. Oktober 2010 (2010-10-30), Seiten 19087-19094, XP055648192, in der Anmeldung erwähnt

## Beschreibung

Die Erfindung betrifft eine Anordnung zur Detektion der Intensitätsverteilung von Komponenten des elektromagnetischen Feldes in Strahlungsbündeln, vorzugsweise zur selektiven Messung der Feldvektorverteilung zur Beurteilung der Strahlqualität von Strahlungsquellen oder zur Analyse und Bewertung der Punktbildverwaschungsfunktion (PSF) oder Modulationsübertragungsfunktion (MTF) von Optiken und anderen optischen Elementen.

Licht als elektromagnetische Welle ist durch ihr Vektorfeld charakterisiert, das wiederum durch drei (kartesische) Komponenten im Raum und deren Amplitude und Phasenlage definiert werden kann.

Aus dem Stand der Technik ist bekannt, ein Strahlenbündel elektromagnetischer Strahlung innerhalb eines definierten Bündelquerschnitts zu analysieren, indem die Intensitätsverteilung mit Standard-Photodetektoren oder Intensitätssensorarrays (wie z.B. CCD, CMOS, FPA etc.) gemessen wird. Falls dabei die lateralen Feldvektorkomponenten (bei Strahlausbreitung in z-Richtung üblicherweise als x- und y-Komponenten bezeichnet) erfasst werden sollen werden zur Trennung der individuellen lateralen Komponenten des Vektorfeldes orthogonal ausgerichtete Polarisatoren bzw. Polarisationsstrahlteiler verwendet. Dabei ist jedoch eine Trennung nach Vektorkomponenten nur in x- und y-Richtung möglich. Für die Phasenmessung können Interferometer eingesetzt werden, die im aufgeteilten Strahlenbündel jeder Polarisationsrichtung jeweils mit einem Referenzstrahl derselben Strahlungsquelle vor der Messstelle im Strahlenbündel ausgekoppelt werden. Es sind jedoch je Vektorkomponente jeweils nur entweder Amplituden- oder Phasenmessungen der Intensität möglich oder es werden nochmals intensitätsschwächende Strahlteiler notwendig.

Im Stand der Technik wurde von V. GRUEV et al.: "CCD polarization imaging sensor with aluminum nanowire optical filters" [in: Opt. Express 18 18 (2010) 19087-19094] beschrieben, für Aufnahmen von lateralen Feldvektorkomponenten eines Lichtbündels ein Sensor auf Basis eines monolithisch erzeugten CCD-Arrays mit einem Mikropolarisationsfilterarray zu verwenden, bei dem jeder individuelle Mikropolarisator aus Aluminium-Nanodrähten (mit ca. 70 nm Durchmesser und 140 nm Abstand) besteht. Die räumliche Auflösung dieses Mikropolarisationsbildsensors ist durch den Pixelmittenabstand des CCD-Sensors begrenzt (beim verwendeten CCD: auf 7,5 µm). Des Weiteren gibt es ein Extinktionsverhältnis zwischen der maximalen und der minimalen Transmission über das Sensorarray, das abhängig ist von der Wellenlänge und dem Einfallswinkel des einfallenden Lichts. Dieses Verhältnis sinkt von ca. 58 bei Einfallswinkel 0° auf ca. 8,5% beim Einfallswinkel von 17° ab. Für Einfallswinkel größer als 20° geht die Polarisationsinformation sogar vollständig verloren aufgrund des Übersprechverhaltens benachbarter Sensorelemente (sog. Crosstalk). Nachteilig ist daran, dass mit solchen kleinen Einfallswinkeln das offenbarte Sensorarray nicht für stark fokussierte Strahlenbündel geeignet ist und - wegen fehlender longitudinaler Polarisationsmessung - nur transversale Polarisationskomponenten messen kann.

Ferner ist aus der optischen Rasternahfeldmikroskopie (SNOM - Scanning Near-field Optical Microscopy) bekannt, den Polarisationszustand von Licht mit verschiedenen Geometrien und Strukturen zu beeinflussen. Dazu schlagen A. S. LAPCHUKA et al. in ihrem Fachartikel "Near-field optical microscope working on TEM wave" [in: Ultramicroscopy 99 (2004) 143-157] eine SNOM-Sonde vor, die mit halbmondförmigen Metallstreifen auf der Oberfläche eines dielektrischen Konus (sog. Mikrostreifensonde) ausgestattet ist, und zeigen damit, dass diese Mikrostreifensonde durch eine transversale elektromagnetische Welle mit Polarisation des elektrischen Feldes senkrecht zu den Metallstreifen angeregt werden kann und das an der Sondenspitze (Apex) verstärkte Feld für einen definierten Beleuchtungsmode genutzt werden kann.

Der Nachteil an dieser Lösung ist, dass diese nicht für eine nach Polarisationsrichtungen aufgelöste Aufnahme verwendbar ist, weil die Lichtaufnahme nicht nur an der Sondenspitze (Apex), sondern auch an den Schlitzen zwischen den Mikrostreifen entlang des Konusmantels erfolgt und deshalb die entscheidende räumlich selektive Auflösung der Polarisationsrichtungen verlorengeht bzw. erheblich gestört ist. Außerdem ist keine Polarisationsmessung in Longitudinalrichtung möglich.

Eine Modifikation der vorgenannten SNOM-Sonde wird in der US 7 933 482 B2 als optische Fasersondenspitze beschrieben, bei der für das Herstellungsverfahren ein Eintauchen eines distalen Endes der optischen Faser mit Mantel beschrieben ist und das Faserende in die Ätzflüssigkeit gehängt und fortschreitend weiter eingetaucht wird, wodurch das Tapern von Faserkern und Fasermantel gleichzeitig erfolgen. Sie können als Besonderheit eine elliptische Querschnittsform aufweisen und werden durch Sputtern mit einer Aluminiumbeschichtung von ca. 30 - 100 nm versehen, um den Anteil an transmittierter Intensität innerhalb des Faserkerns zu erhöhen. Abschließend wird die Spitze mittels eines lonenstrahls abgetragen und bildet eine abtrennte Spitze. Die so hergestellten optischen Fasersondenspitzen sind dann für die optische Rasternahfeldmikroskopie verwendbar. Die Anwendung dieser Sondenspitze hat aber bei der Rastermikroskopie den Nachteil der zeitaufwändigen, weil nicht zeitgleichen, Einzelpixelerfassung für ein 2D-Imaging einer Probe und erlaubt auch keine Aufnahme eines vollständigen Vektorfeldes an der untersuchten Stelle des Strahlenbündels.

Des Weiteren sind aus der US 8 248 599 B2 Verfahren zur Realisierung von unterschiedlichen Polarisationszuständen und deren Anwendungen bekannt geworden, die spezielle Eigenschaften aufweisen und mit denen extrem starke longitudinale Felder erzeugt werden können. Dabei werden diese Polarisationszustände mit Oberflächenplasmonenanregung kombiniert und können dadurch für aperturlose optische Rasternahfeldmikroskopie (aperturlose SNOM) verwendet werden und eine potenzielle örtliche Auflösung von unter 10 nm erreichen. Dafür wird ein radial polarisiertes Strahlenbündel in eine Plasmonpolaritonen erzeugende optische Faser gerichtet, wobei die Faser eine metallbeschichtete, getaperte, aperturlose Spitze aufweist, die Oberflächenplasmonwellen erzeugt und diese Wellen zur Spitze richtet, wenn ein radial polarisiertes Strahlenbündel vorliegt. Mit dem Mikroskopobjektiv werden die optischen Nahfeldsignale einer benachbart zur aperturlosen Spitze positionierten Sonde aufgenommen und können für ein zuverlässiges Nano-Raman-System verwendet werden, das mechanische oder chemische Verbindungen untersuchen kann. Nachteilig dabei ist, dass die optische Rasternahfeldmikroskopie die bereits oben beschriebenen Nachteile beibehält, und die mit der Faserspitze erzeugten Oberflächenplasmonenwellen mit einer zweiten Sonde (Ramansonde) nur als Einzelpixelabtastungen der Probe im Rasterscanningverfahren zu 2D-Messbildern führen.

Der Erfindung liegt die Aufgabe zugrunde, eine neue Möglichkeit zur Detektion der Intensitätsverteilung von Komponenten des elektromagnetischen Feldes in Strahlungsbündeln zu finden, mit der eine hochauflösende Bestimmung der Amplituden der Feldvektorkomponenten eines Strahlungsbündels elektromagnetischer Strahlung möglich ist und eine höhere Detektionseffizienz der Auflösung in einem weiten Winkelspektrum erreicht wird. Außerdem soll eine Bestimmung der Phasenlage der Feldvektorkomponenten parallel zur Amplitudenmessung möglich sein.

Erfindungsgemäß wird die Aufgabe durch eine Anordnung zur Detektion der Intensitätsverteilung von Komponenten des elektromagnetischen Feldes in Strahlungsbündeln nach Anspruch 1 gelöst, die ein hochauflösendes zweidimensionales Intensitätssensorarray und ein Feldvektor-Detektorarray, bestehend aus verschiedenen Bereichen von Detektorstrukturen mit mindestens drei individuellen Detektorstrukturen für zwei individuelle transversale Feldvektorkomponenten Eₓ, E_{y} und eine longitudinale Feldvektorkomponente E_{z}, enthält, wobei die Detektorstrukturen als einzelne Mikrostrukturen jeweils mindestens einem Sensorelement des zweidimensionalen Intensitätssensorarrays zugeordnet und im einfallenden Strahlenbündel vor diesen angeordnet sind, die Detektorstrukturen metallische mantelförmige Spitzen mit unterschiedlichen Apizes (Enden der Spitzen) als Nanostrukturen so ausgebildet sind, um auf Grund lokalisierter Plasmonresonanz (LPR) der jeweiligen Nanostruktur der individuellen Detektorstrukturen und durch LPR angeregter lokalisierter Oberflächenplasmonen (LSP) eine elektromagnetische Feldverteilung im einfallenden Strahlenbündel für eine Polarisationsselektion nach individuellen transversalen und longitudinalen Feldvektorkomponenten Eₓ, E_{y}, E_{z} zu nutzen und auf Basis des Fortschreitens von Oberflächenplasmonpolaritonen (SPP) und photonischer Wellenleitung (WGM) zu den zugeordneten Sensorelementen des Intensitätssensorarrays zu übertragen, wo lokalisierte Photonenstrahlenbündel als Intensitätssignale aufnehmbar sind, wobei die Detektorstrukturen für die individuellen longitudinalen Feldvektorkomponente E_{z} als konische aperturlose metallische Spitzen ausgebildet sind und die Detektorstrukturen für die individuellen Feldvektorkomponenten Eₓ, E_{y} als unterschiedlich orientierte metallische Spitzen mit einer Apertur am Apex ausgebildet sind, wobei eine Detektorstruktur für die transversale Feldvektorkomponente Eₓ und eine Detektorstruktur für die Feldvektorkomponente E_{y} zueinander axial um 90° gedreht angeordnet sind.

Dabei kann die Zuordnung zwischen Detektorstrukturen und Sensorelementen pixelweise oder zu Gruppen von Sensorelementen (beispielsweise 2x2, 3x3 etc.) vorgenommen werden, wobei in den letzteren Fällen das Intensitätssensorarray gruppenweise durch den Detektorstrukturen zugeordnetes Binning der Sensorelemente mit erhöhter Auslesegeschwindigkeit ausgelesen werden kann. Wegen der höheren Auflösung ist aber die pixelweise Zuordnung zu bevorzugen. Dabei weisen die aperturlosen metallischen Spitzen zweckmäßig im Innenraum einen Wellenleiter aus einem Dielektrikum oder Halbleiter auf, um SPP zu einem WGM auszukoppeln und zum Sensorelement zu transportieren.

Die Detektorstrukturen für die individuellen transversalen Feldvektorkomponenten Eₓ, E_{y} weisen vorteilhaft zwei axialsymmetrisch an der Innenseite der metallischen Spitze gegenüberliegende streifenförmige Dämpfungsschichten zur Extinktion oder Schwächung der LSP und SPP und WGM für eine der transversalen Feldvektorkomponenten Eₓ, E_{y} auf, die für die transversale Feldvektorkomponente Eₓ und für die transversale Feldvektorkomponente E_{y} zueinander axial um 90° gedreht angeordnet sind. Zweckmäßig sind die metallischen Spitzen mit Apertur zylindrisch, konisch oder pyramidenförmig geformt, wobei sie kreisförmige oder elliptische, quadratische oder rechteckige Querschnitte aufweisen, und im Innenraum einen Wellenleiter aus einem Dielektrikum oder Halbleiter enthalten, die für die transversalen Feldvektorkomponenten Eₓ, E_{y} zueinander axial um 90° gedreht angeordnet sind. Weiterhin kann die Apertur der metallischen Spitzen zweckmäßig kreisförmig, elliptisch oder rechteckig geformt sein, wobei bei einer schmalen bis spaltförmigen Ausformung die Längsausdehnung der jeweiligen Apertur der Detektorstrukturen für die transversalen Feldvektorkomponenten Eₓ, E_{y} zueinander axial um 90° gedreht ausgerichtet ist.

Vorzugsweise kann die schmale oder spaltförmige Apertur durch einen mittig eingebrachten metallischen Steg unterbrochen sein. Ferner können die Dämpfungsschichten von dem Apex beginnend nach unten eine gleichmäßige oder abnehmende Schichtdicke aufweisen.

Es erweist sich als zweckmäßig, dass die Spitzten mit Apertur zwei zusätzliche Dämpfungsschichten an einer ebenen Außenseite oder einer ebenen Innenseite des Apex oder an einer Innenseite der Apertur axialsymmetrisch gegenüberliegend angebracht sind.

Ein weiterer Vorteil ergibt sich, wenn die Spitzen an einer Grenzfläche der metallischen Spitze mit einem Wellenleiter in Streifenbereichen, die nicht mit den streifenförmigen Dämpfungsschichten belegt sind, Gitterstrukturen zur Verbesserung der Kopplung zwischen der LSP und der WGM und Kollimation derselben aufweisen.

Vorteilhaft können die verschiedenen Bereiche von Detektorarraystrukturen des Feldvektor-Detektorarrays außer den mindestens drei individuellen Detektorstrukturen mindestens einen Referenzbereich beinhalten. Dabei kann der mindestens eine Referenzbereich entweder ein von den individuellen Detektorstrukturen strukturfreier Bereich oder ein mit wenigstens einer Referenzstruktur belegter Referenzbereich sein, wobei die Referenzstruktur optional mit gleicher Höhe wie die individuellen Detektorstrukturen ausgebildet ist.

Des Weiteren ist die wenigstens eine Referenzstruktur vorzugsweise als axialsymmetrische metallische Spitze zylindrisch, konisch, pyramiden- oder quaderförmig ausgebildet und mit einer axialsymmetrischen Apertur an ihrem Apex versehen.

In einer bevorzugten Ausführung ist das Feldvektor-Detektorarray mit den Detektorstrukturen direkt auf dem Intensitätssensorarray über den Sensorelementen monolithisch aufgebracht. Dabei können in einer vorteilhaften Ausführung die metallischen mantelförmigen Spitzen der Detektorstrukturen im Innenraum der Spitzen als Wellenleiter einen getaperten Halbleiter enthalten und das Intensitätssensorarray als ein Schottky-Dioden-Array, das einen Metall-Halbleiter-Kontakt zwischen Metallmantel-Spitze und Halbleiter-Wellenleiter ausnutzt, ausgebildet sein.

In einer weiteren zweckmäßigen Gestaltungsform ist das Feldvektor-Detektorarray mit den Detektorstrukturen auf einem separaten Substrat gefertigt und mit dem Intensitätssensorarray mittels eines am Substrat befindlichen strahlformenden optischen Arrays mit den einzelnen Sensorelementen des Intensitätssensorarrays in Freistrahloptik optisch gekoppelt.

In einer weiteren vorteilhaften Ausgestaltung ist das Feldvektor-Detektorarray mit den Detektorstrukturen auf einem separaten Substrat gefertigt und auf dem Feldvektor-Detektorarray entweder mit dem Substrat vollflächig oder mit Abstandshaltern aufgebracht.

In beiden vorgenannten Ausführungsformen, kann das strahlformende optische Array refraktive Linsen, GRIN-Linsen, Metamateriallinsen (Metalenses), diffraktive optische Elemente oder strahlformende Mikro- oder Nanostrukturen aufweisen oder durch eine Kombination von mehreren der genannten optischen Elemente gebildet werden.

In einer weiteren bevorzugten Ausführung der Erfindung sind eine definierte Anzahl von Spitzen mit Apertur gegenüber den Detektorstrukturen für die transversalen Feldvektorkomponenten Eₓ, E_{y} um ±45° gedreht angeordnet, um individuelle transversale Polarisationszustände im einfallenden Strahlenbündel unter Winkeln von 0°, 45°, 90° und 135° bestimmen zu können.

Vorteilhaft ist es, wenn das Feldvektor-Detektorarray und das Intensitätssensorarray als räumlich getrennte Detektoranordnungen in einer Detektionseinrichtung zur Ermittlung der Phasen der Feldvektorkomponenten Eₓ, E_{y}, E_{z} angeordnet sind.

In weiteren vorteilhaften Varianten sind das Feldvektor-Detektorarray und das Intensitätssensorarray alternativ in einer Zwei-Schritt-Amplituden-und-Phasen-Detektionsanordnung, in einer Heterodyn-Interferometeranordnung, in einer Pseudo-Heterodyn-Interferometeranordnung oder in einer Homodyn-Interferometeranordnung integriert nach dem Messobjekt angeordnet.

Zweckmäßig ist das Intensitätssensorarray als Sensormatrix für Photonendetektion, für Wärmedetektion oder für Hot-Carrier-Detektion (Schottky-Effekt) ausgebildet.

In einer bevorzugten Variante ist die Detektorstruktur für die individuellen longitudinalen Feldvektorkomponente E_{z} als eine konische aperturlose metallische Spitze ausgebildet und weist im Innenraum ein Dielektrikum oder einen Isolator sowie einen axial angeordneten Metalldraht aus einem anderen Metall als die metallische Spitze mit einer Kontaktstelle an dem aperturlosen Apex auf, und so eine thermoelement-gekoppelte Spitze als eine individuelle Detektorstruktur für die eine longitudinale Feldvektorkomponente E_{z} darstellt.

Die Detektorstrukturen für die individuellen transversalen Feldvektorkomponenten Eₓ, E_{y} sind bevorzugt als unterschiedlich orientierte, zylindrisch, konisch, pyramiden- oder quaderförmig geformte Spitzen ausgebildet, wobei sie kreisförmige oder elliptische, quadratische oder rechteckige Querschnitte aufweisen, und ein Dielektrikum oder einen Isolator mit axialsymmetrisch gegenüberliegenden Metallstreifen an der Mantelfläche sowie einen axial angeordneten Metalldraht aus einem anderen Metall als die Metallstreifen mit einer Kontaktstelle am Apex durch verlängerte metallische Nanopartikel aufweisen, wobei die axialsymmetrisch angeordneten Metallstreifen an der Mantelfläche der Detektorstruktur für die transversale Feldvektorkomponente Eₓ und der Detektorstruktur für die transversale Feldvektorkomponente E_{y} zueinander axial um 90° gedreht angeordnet sind.

In einer optionalen Ausführung ist eine Scaneinrichtung zur ein-, zwei- oder dreidimensionalen pixel- oder subpixelweisen Scanbewegung des Feldvektor-Detektorarrays relativ zum Strahlungsbündel vorhanden, um die verschiedenen Bereiche von Detektorstrukturen für die drei individuellen Detektorstrukturen so zu verschieben, dass jede der drei individuellen Detektorstrukturen für die Feldvektorkomponenten Eₓ, E_{y}, E_{z} wenigstens einmal auf jeder Sensorelementposition des Intensitätssensorarrays für ein im Strahlquerschnitt des einfallenden Strahlungsbündels aufzunehmenden hochaufgelösten zweidimensionalen Bildes positioniert ist.

Weiterhin wird die Aufgabe erfindungsgemäß gelöst durch Verwendung einer Anordnung nach Anspruch 1 in einem optischen Rasternahfeldmikroskop (SNOM - Scanning Near-field Optical Microscope) zur Aufnahme von großflächig zweidimensionalen Probenbildern in drei Feldvektorkomponenten, um Dipolmoment-Orientierung von Molekülen auf fluiden oder festen Oberflächen zu bestimmen.

Die Erfindung basiert auf der Grundüberlegung, dass die Strahlanalysen zur Aufnahme von Feldvektorkomponenten des Strahlenbündels entweder nur auf die zwei Transversalkomponenten des Feldvektors beschränkt sind oder aber auf die optische Rasternahfeldmikroskopie (SNOM) zurückgreifen, wodurch der Feldvektor jedenfalls nur mit sequentiellem Versatz und dementsprechendem Zeitaufwand gemessen werden kann.

Gemäß der Erfindung werden diese Probleme gelöst, indem nicht nur alle (kartesischen) Feldvektorkomponenten (deren Amplituden und Phasen) ermittelt werden, sondern auch im gesamten Querschnitt des Strahlenbündels, oder in wesentlichen Teilflächen davon, die Feldvektorkomponenten gleichzeitig erfasst werden können. Dies wird dadurch erreicht, dass ein Feldvektor-Detektorarray als räumliche Anordnung von mehreren individuellen Detektorstruktur zur separaten Erfassung der drei Feldvektorkomponenten über einem zweidimensionalen Intensitätssensorarray (CCD, CMOS, FPA von QWIP, QDIP, Photodiodenarray, etc.) angeordnet ist und die einzelnen Detektorstrukturen den Intensitätssensorelementen pixelweise oder in Gruppen (von beispielsweise 2x2, 3x3 etc.) zugeordnet sind.

Dadurch können mit (relativ wenigen) Pixel- oder Subpixel-Scanbewegungen alle unterschiedlichen Detektorstrukturen auf die Positionen der jeweils anderen Detektorstrukturen verschoben und dabei der gesamte Strahlbündelquerschnitt oder große Teile davon in wenigen Millisekunden aufgenommen werden, während ein herkömmlicher rastermikroskopischer Vollbildscan über mehrere Stunden dauern würde. In den vorteilhaften Ausführungsvarianten können die drei unterschiedlichen Feldvektorstrukturen bereichsweise in zweidimensionalen Gruppen geordnet oder in wiederkehrenden gemischten Strukturbereichen von beispielsweise Vierergruppen, (z. B. nach dem Prinzip der Bayer-Farbfiltermaske) geordnet über dem Intensitätssensorarray verteilt angeordnet sein.

Die einzelnen Detektorstrukturen sind als unterschiedlich geformte Metallspitzen ausgebildet, bei der die Spitze für die longitudinale Feldvektorkomponente (z.B. z-Komponente) eine axialsymmetrische Kegelform am Apex (mindestens in der Region der Plasmonenanregung von ≥ 1/2 λ (λ - einfallende Wellenlänge) aufweist, während für die beiden transversalen Feldvektorkomponenten (z.B. x-, y-Komponenten) unterschiedliche Formen einsetzbar sind aus der Gruppe konisch, zylindrisch, pyramiden- oder quaderförmig (mit quadratischer oder rechteckiger Grundfläche), mit jeweils gegenüberliegenden Dämpfungsschichtabschnitten, die für die x- und y-Komponenten jeweils um 90° verdreht sind.

Um die Feldvektorkomponenten vollständig - auch in Bezug auf die Phase - zu bestimmen, ist das zu messende Strahlenbündel durch einen oder mehrere Intensitätsteiler auf ein oder zwei gleichartige Detektorarrays aufzuteilen und mit einem Referenzstrahlenbündel zu überlagern oder über geeignete Interferometeranordnungen (z.B. Michelson-, Mach-Zehnder-Interferometer) und gegebenenfalls mittels nachgeordneter Lock-in-Verstärker auszuwerten. Letztere interferometrische Phasenbestimmungsmethoden können homodyn oder heterodyn oder pseudo-heterodyn ausgeführt werden.

Von besonderem Vorteil ist bei der Erfindung, dass ein hochauslösendes Feldvektor-Detektorarray mit allen herkömmlichen intensitätsmessenden Photosensorarrays (CCD, CMOS, FPA etc.) und spannungsmessenden Detektorarrys (Schottky-Dioden-Array, Thermoelementarray, Mikrobolometerarray etc.) kombiniert werden kann.

Des Weiteren kann das erfindungsgemäße Feldvektor-Detektorarray nach dem Prinzip der Bayer-Farbfiltermaske (oder auch CYGM oder CMYW oder Sony-RGBE etc.) aus Vier-Pixel-Elementen oder aus Quadrantenbereichen mit den Feldvektorkomponenten (mit oder ohne Referenzstrukturen) strukturiert zusammengefügt sein und ist mit üblichen Bildsensor-Scanmodi zur Auflösungserhöhung und vergleichbaren -Verarbeitungsalgorithmen bedienbar und auswertbar.

Durch die Erfindung wird eine neuartige Möglichkeit zur Detektion der Intensitätsverteilung von Komponenten des elektromagnetischen Feldes in Strahlungsbündeln aufgezeigt, mit der eine hochauflösende Bestimmung der Feldvektorkomponenten in einem Strahlenbündel elektromagnetischer Strahlung erfolgt und die Detektionswinkelspektrums deutlich vergrößert wird. Damit sind erstmalig in einem Strahlungsbündel elektromagnetischer Strahlung eine parallelisiere Aufnahme der unterschiedlichen Feldvektorkomponenten bezüglich deren Amplituden und Phasen möglich.

Die Erfindung wird nachfolgend anhand von Ausführungsbeispielen und Abbildungen näher erläutert. Dabei zeigen:

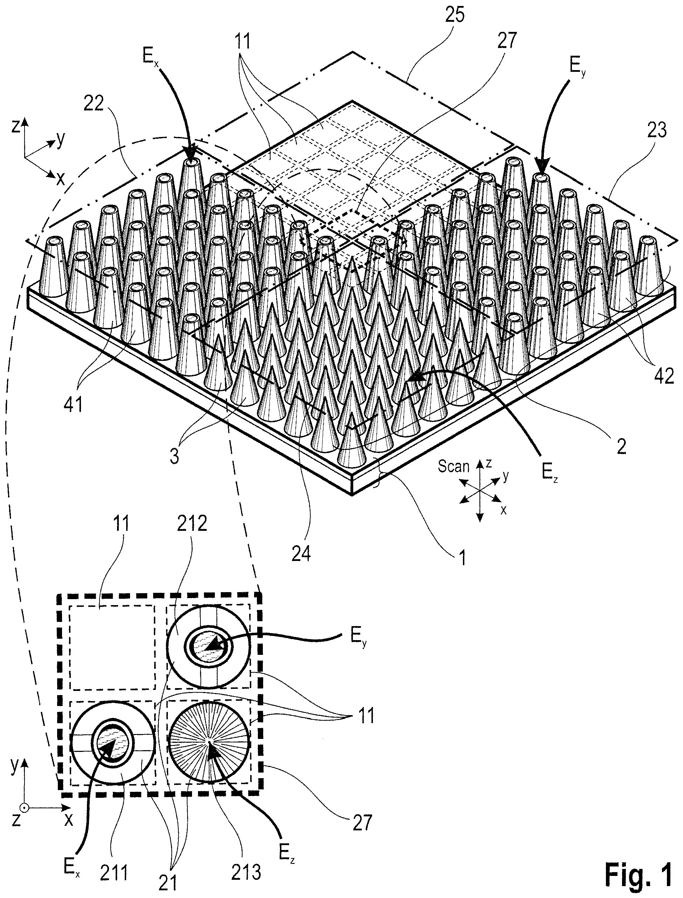

- Fig. 1:: eine schematische Darstellung einer ersten Ausführung der erfindungsgemäßen Anordnung mit drei großflächigen Bereichen, die jeweils aus einer der unterschiedlichen Spitzen zur selektiven Detektion von Feldvektorkomponenten bestehen, sowie einem strukturfreien Bereich zur Referenzbildung oder andere optische Messaufgaben;

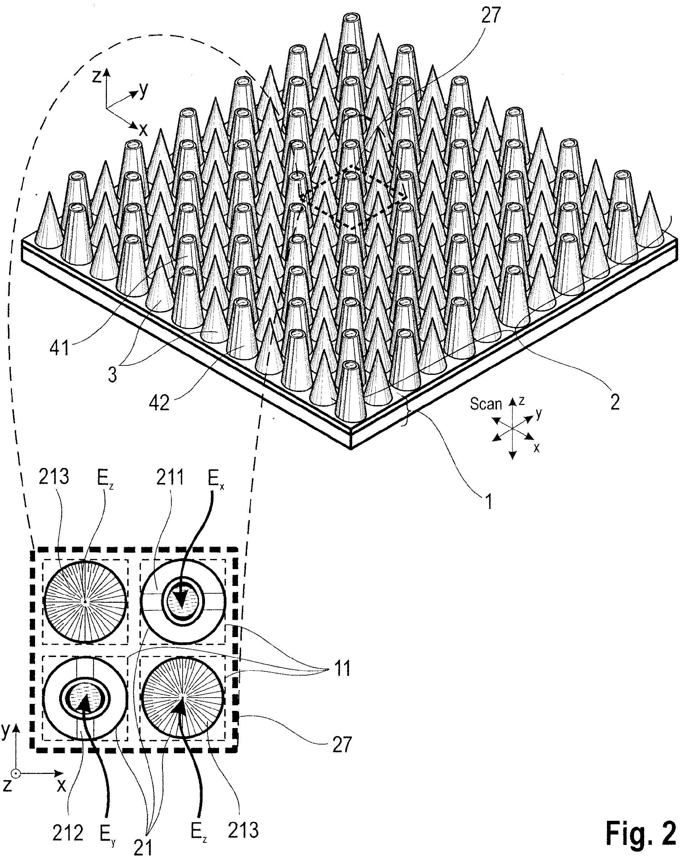

- Fig. 2:: eine schematische Darstellung einer zweiten Ausführung der erfindungsgemäßen Anordnung mit gleichen wiederkehrend angeordneten gemischten Strukturbereichen der unterschiedlichen Spitzen zur selektiven Detektion der Feldvektorkomponenten in x-, y- und z-Richtung in Anlehnung an das Prinzip der Bayerfarbmaske;

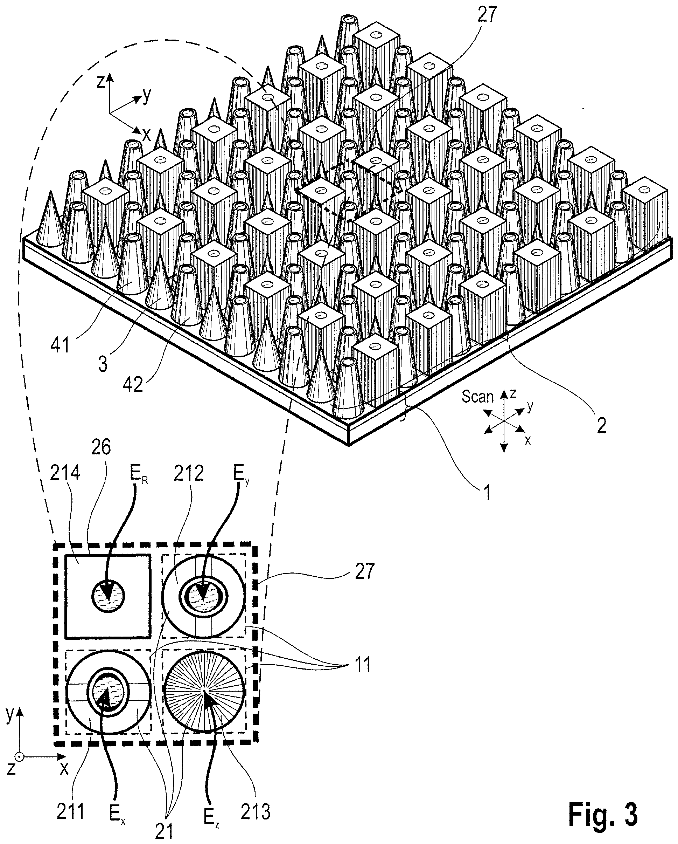

- Fig. 3:: eine schematische Darstellung einer dritten Ausführung der erfindungsgemäßen Anordnung mit gleichen wiederkehrend angeordneten gemischten Strukturbereichen aus den drei unterschiedlichen Spitzen zur selektiven Detektion von Feldvektorkomponenten sowie einer Referenzstruktur, die den Detektorstrukturen der transversalen Feldvektorkomponenten in Höhe der Strukturen sowie Aperturgröße und -form angepasst nachgebildet ist;

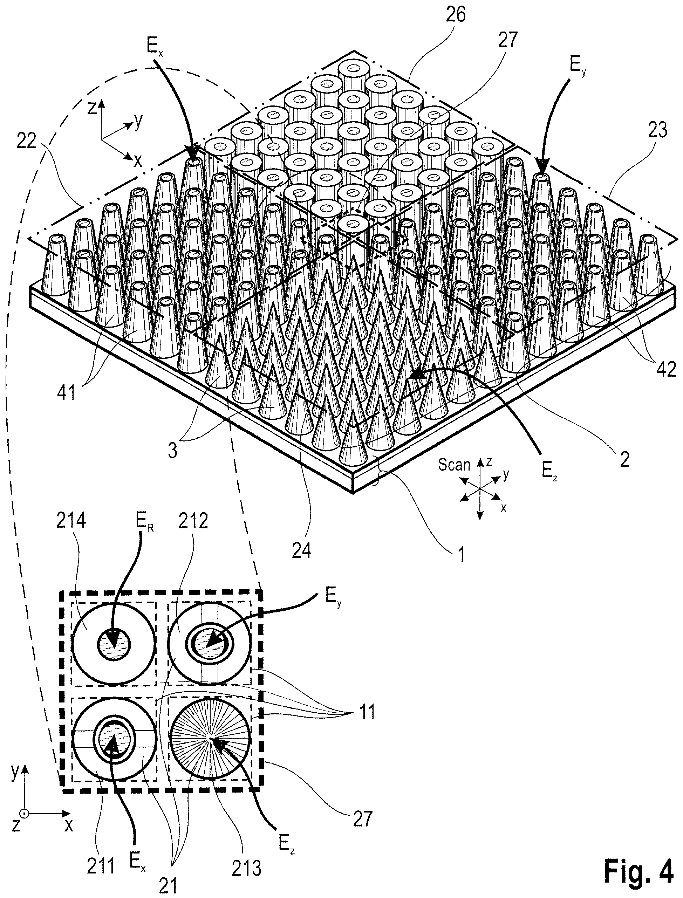

- Fig. 4:: eine schematische Darstellung einer vierten Ausführung der erfindungsgemäßen Anordnung mit drei großflächigen Bereichen, die jeweils eine der unterschiedlichen Spitzen zur selektiven Detektion der Feldvektorkomponenten aufweisen, sowie einem Bereich mit Referenzstrukturen, die den Detektorstrukturen der transversalen Feldvektorkomponenten in Größe und Form nachgebildet sind;

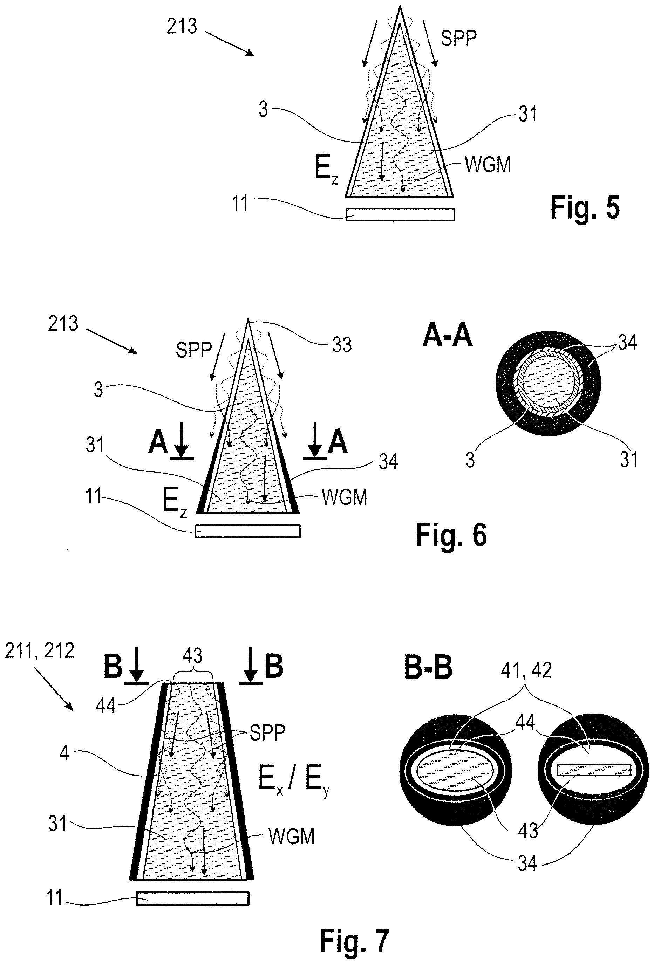

- Fig. 5:: eine schematische Axialschnittdarstellung einer plasmonischen aperturlosen Spitze über einem Sensorelement mit einer Prinzipdarstellung der resonanten Einkopplung von longitudinal lokalisierten Oberflächenplasmonen (LSP) und Oberflächenplasmonpolaritonen (SPP) und photonischer Wellenleitung (WGM);
- Fig. 6:: eine schematische Axialschnittdarstellung einer plasmonischen Spitze über einem Sensorelement mit einer ab der Einkopplungshöhe nach unten zunehmenden axialsymmetrischen Dämpfungsschicht zur Absorption von uneingekoppelter SPP und Unterdrückung von Crosstalk zu benachbarten Spitzen sowie die Darstellung eines Querschnitts;
- Fig. 7:: eine schematische Axialschnittdarstellung einer plasmonischen Spitze mit gekürztem Apex und dadurch entstehender Apertur zur direkten Anregung der SPP und WGM im Wellenleiter sowie Draufsichten auf zwei Ausführungen für die Formen der Apertur und des Apex;

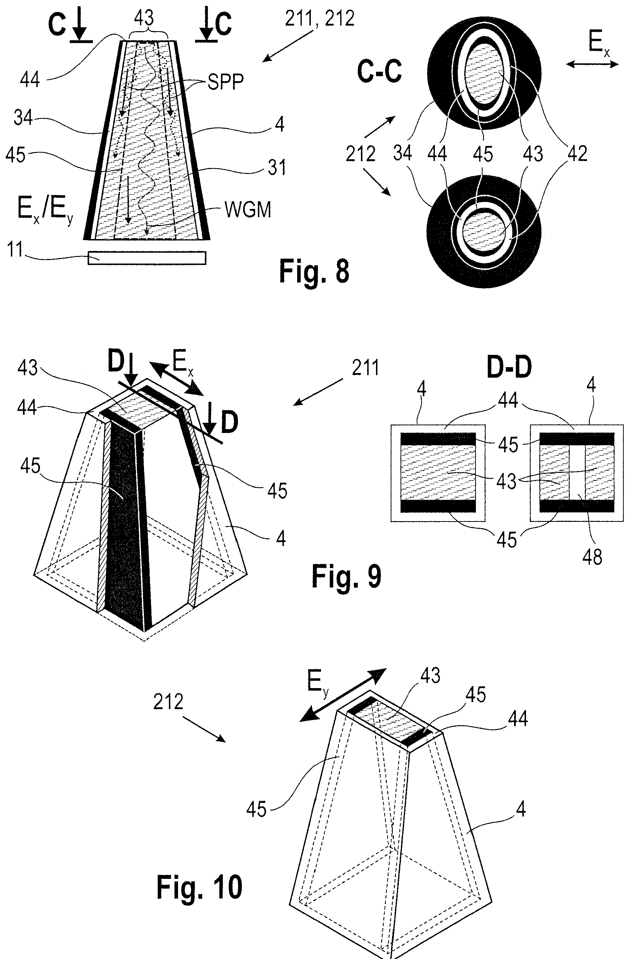

- Fig. 8:: eine schematische Darstellung einer plasmonischen Spitze mit gekürztem Apex und dadurch erzeugter Apertur sowie am Apex beginnenden inneren axial gegenüberliegenden streifenförmigen Dämpfungsschichten, zur Erzeugung selektiver Richtungsempfindlichkeit für eine ausgezeichnete Richtung transversaler Feldvektorkomponenten sowie zwei Draufsichten für eine kreisrunde und eine elliptische Form von Apex und Apertur;
- Fig. 9:: eine perspektivische Schnittdarstellung einer plasmonischen Spitze mit gekürztem Apex und quadratischem Querschnitt;
- Fig. 10:: eine perspektivische Darstellung einer plasmonischen Spitze mit gekürztem Apex und rechteckigem Querschnitt;

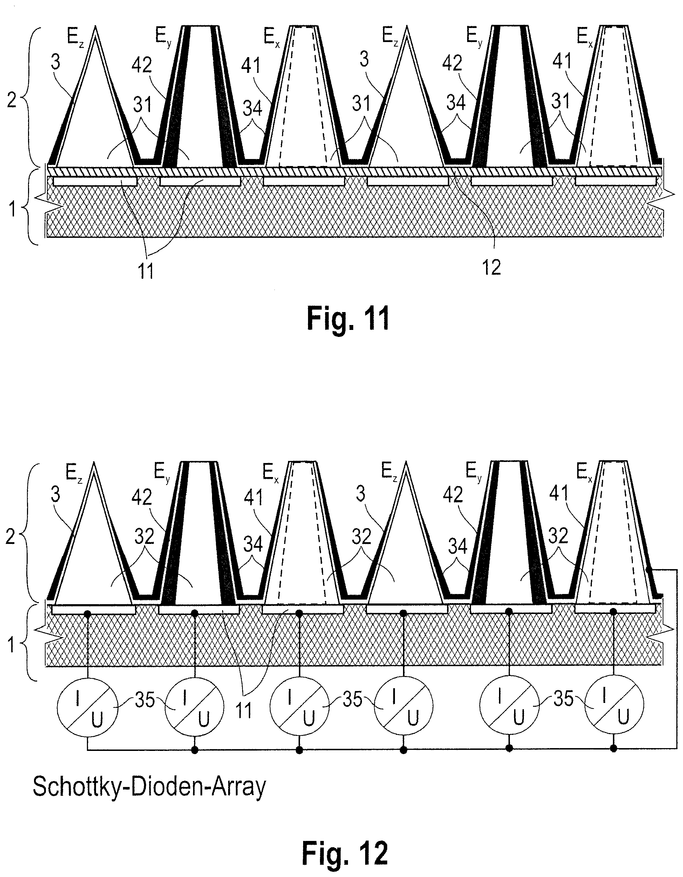

- Fig. 11:: eine stilisierte Darstellung einer Ausführungsform des Feldvektor-Detektorarrays mit auf dem Intensitätssensorarray monolithisch aufgebrachten metallischen Spitzen als Detektorstrukturen für die longitudinale und die transversalen Feldvektorkomponenten;
- Fig. 12:: eine Ausführungsform des Feldvektor-Detektorarrays wie in Fig. 11, jedoch mit einem Intensitätssensorarray auf Basis eines Schottky-Dioden-Arrays;

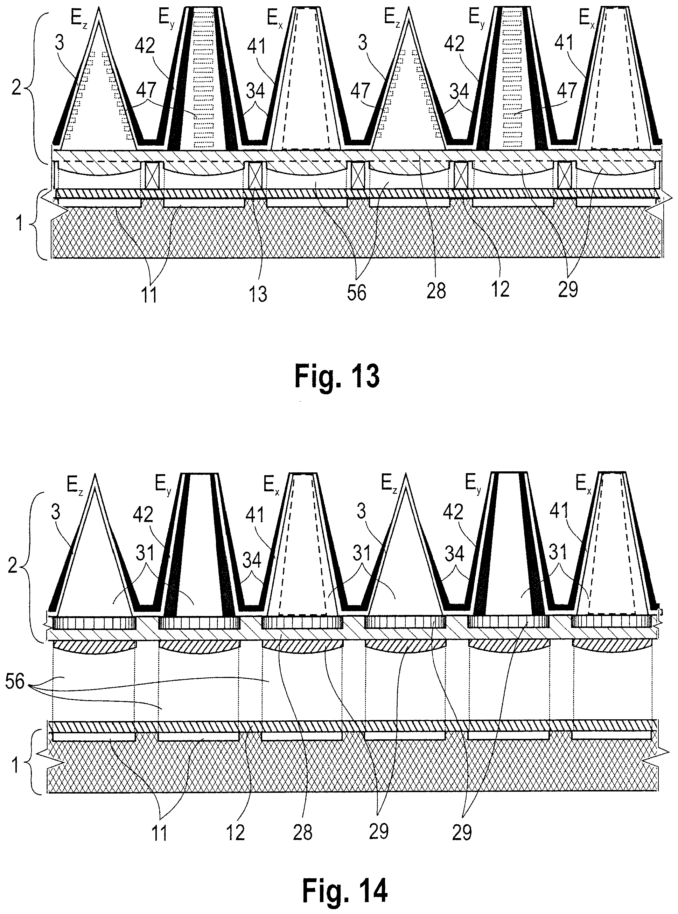

- Fig. 13:: eine weitere Ausführungsform des Feldvektor-Detektorarrays mit auf einem separaten Substrat aufgebrachten metallischen Spitzen als Detektorstrukturen für die longitudinale und transversalen Feldvektorkomponenten, wobei das Substrat mit Abstandshaltern auf dem Intensitätssensorarray aufgebracht ist und ein strahlformendes optisches Array zur Kollimation oder Fokussierung der divergenten Strahlung aus den Detektorstrukturen der einzelnen Feldvektorkomponenten auf zugeordnete Sensorelemente des Intensitätssensorarrays aufweist;
- Fig. 14:: eine Ausführungsform des Feldvektor-Detektorarrays mit auf einem separaten Substrat aufgebrachten metallischen Spitzen als Detektorstrukturen für die longitudinalen und transversalen Feldvektorkomponenten, wobei am Substrat auf Ober- und Unterseite ein strahlformendes optisches Array zur Kollimation oder Fokussierung der Strahlung der einzelnen Feldvektorkomponenten zu dem Intensitätssensorarray aufgebracht ist, das eine Freistrahloptik bis zum Intensitätssensorarray ermöglicht;

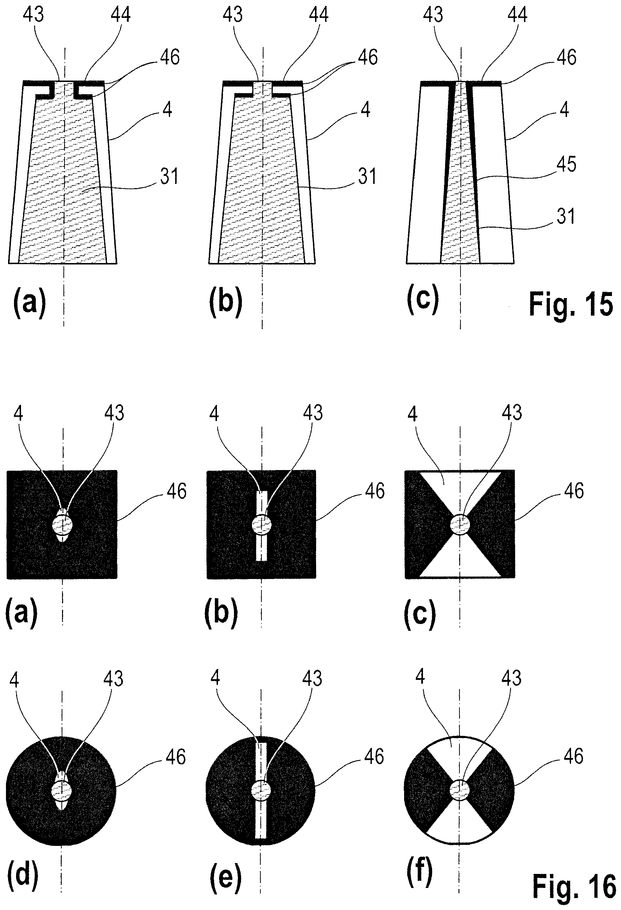

- Fig. 15:: drei Varianten der transversalen Detektorstrukturen in Fällen, in denen zusätzliche Dämpfungsschichten im Apexbereich vorteilhaft sind, wenn der Apex entweder (a) mit inneren Dämpfungsstreifen, (b) ohne innere Dämpfungsstreifen eine ebene Fläche mit einer kleineren Apertur aufweist oder (c) die metallische Spitze besonders dickwandig ist;
- Fig. 16:: sechs ausgewählte Varianten für die Form zusätzlicher Dämpfungsschichten der metallischen Spitzen aus Fig. 15 mit Dämpfungsschicht auf einer ebenen Apexfläche oder deren Innenseite, gezeigt für Kegelstumpf- oder Zylinderformen (a-c) und Pyramidenstumpfformen (d-f) der metallischen Spitzen;

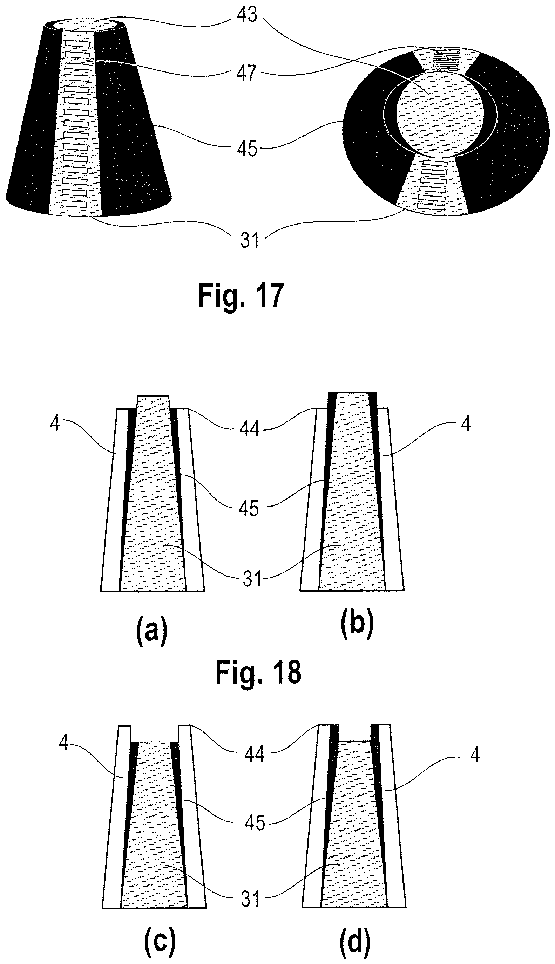

- Fig. 17:: zwei perspektivische Zeichnungen einer Spitze, die eine Apertur aufweist, mit entblößtem Wellenleiter (d.h. ohne Darstellung des Metallmantels) zur Darstellung von zusätzlichen Gitterstrukturen, die zwischen den gegenüberliegenden Dämpfungsschichten angeordnet sind für die verbesserte LSP- und WGM-Kopplung und Kollimation derselben;
- Fig. 18:: vier mögliche Varianten der Spitzen für die transversalen Detektorstrukturen, bei denen der Wellenleiter und/oder die streifenförmigen Dämpfungsschichten (a), (b) gegenüber dem Apex der Spitzen überstehen oder (c), (d) unter dem Apex zurückstehen;

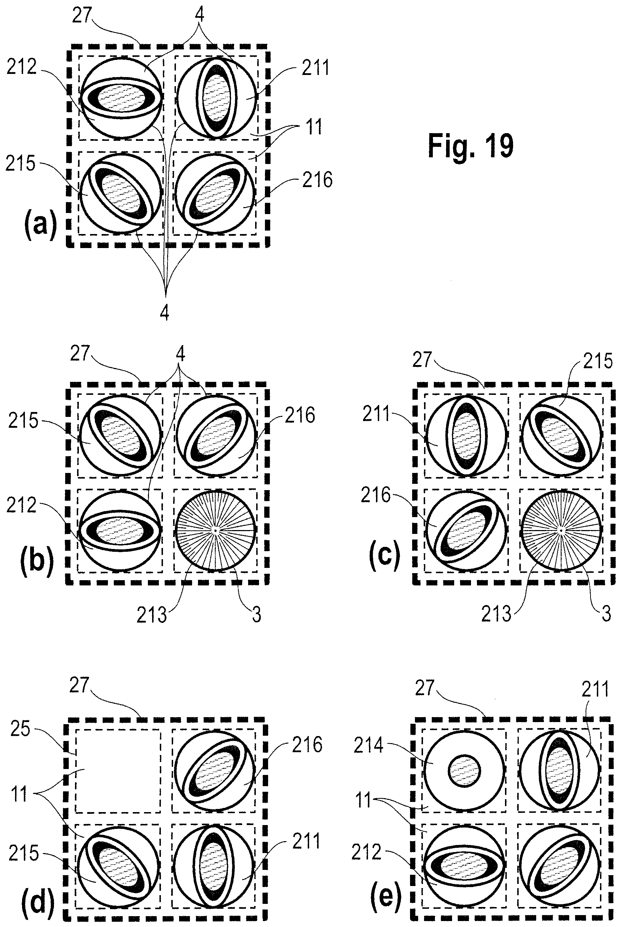

- Fig. 19: fünf unterschiedliche Varianten von gemischten Strukturbereichen des Feldvektor-Detektorarrays zur simultanen Bestimmung von Polarisationszuständen des elektromagnetischen Feldes im einfallenden Strahlenbündel (a) mit transversalen Komponenten unter Winkeln von 0°, 45°, 90° und 135°, (b) mit longitudinaler Komponente und transversalen Komponenten unter 45°, 90° und 135°, (c) mit longitudinaler Komponente und transversalen Komponenten unter 0°, 45° und 135°, (d) mit einem strukturfreien Bereich und transversalen Komponenten unter 0°, 45° und 135° sowie (e) mit einer Referenzstruktur und transversalen Komponenten unter 0°, 45° und 90°;

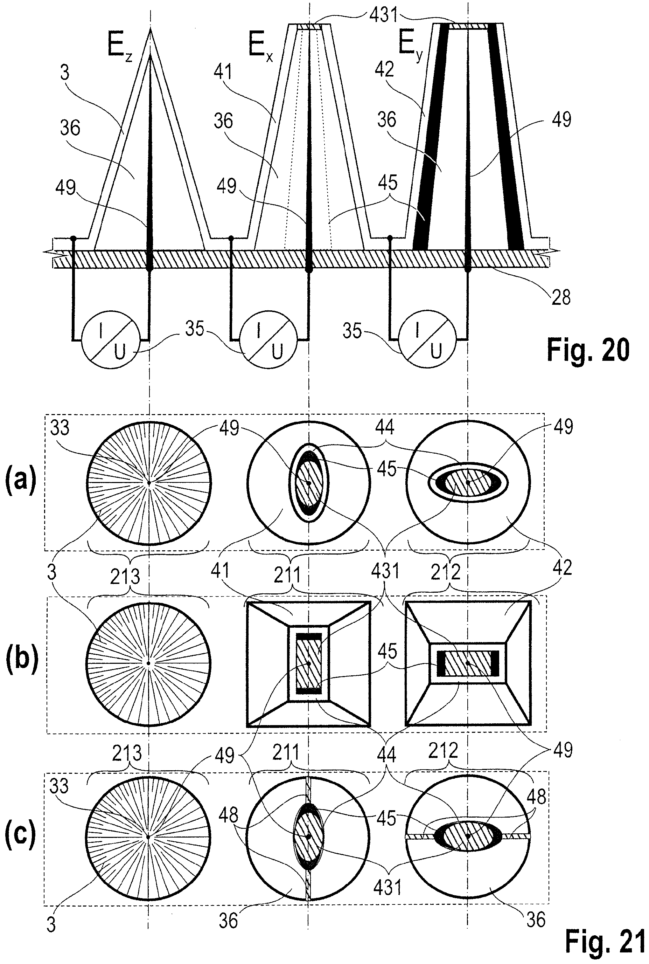

- Fig. 20:: eine schematische Darstellung des Feldvektordetektorarrays als Ausschnitt mit drei Detektorstrukturen mit je einem axialen Metalldraht, der eine Kontaktstelle mit der metallischen Spitze am Apex der Detektorstruktur aufweist, um auf Basis eines Thermoelement-Arrays die Intensitäten der Feldvektorkomponenten aufzunehmen;
- Fig. 21:: drei Draufsichten auf den Ausschnitt des Feldvektor-Detektorarrays von Fig. 20 mit drei unterschiedlichen Arten der Gestaltung der Spitzen der Detektorstrukturen;

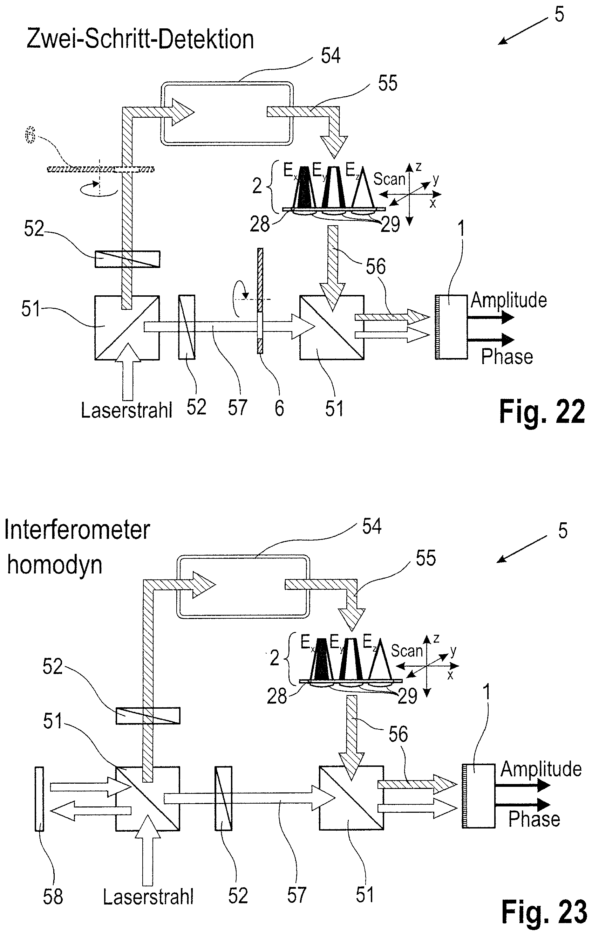

- Fig. 22:: eine Detektionseinrichtung zur Phasenbestimmung auf Basis einer Zweistufendetektion mit nach dem Feldvektor-Detektorarray aufgeteilten Strahlengängen zur Amplitudenmessung und zur Phasenmessung,
- Fig. 23:: eine weitere Detektionseinrichtung zur Phasenbestimmung auf Basis eines Homodyn-Interferometers mit einstellbarem Referenzspiegel,

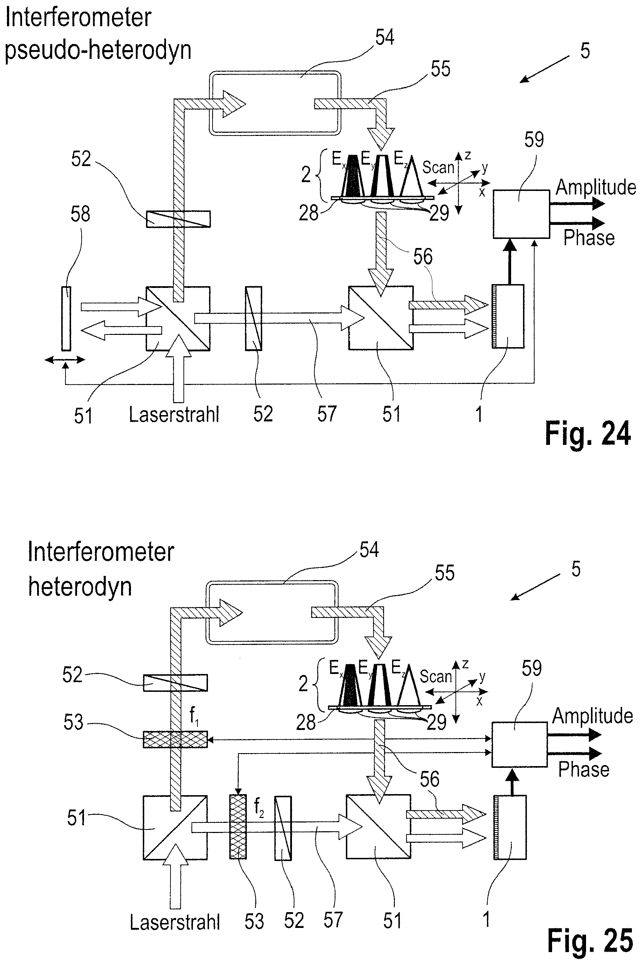

- Fig. 24:: eine weitere Detektionseinrichtung zur Phasenbestimmung auf Basis eines Pseudo-Heterodyn-Interferometers mit oszillierendem Referenzspiegel,
- Fig. 25:: eine weitere Detektionseinrichtung zur Phasenbestimmung auf Basis eines Heterodyn-Interferometers.

Der grundsätzliche Aufbau einer erfindungsgemäßen Anordnung gemäß Fig. 1 umfasst ein zweidimensionales Intensitätssensorarray 1 und ein Feldvektor-Detektorarray 2 für die unterschiedlichen Feldvektorkomponenten als räumliche Anordnung von je einer Struktur zur separaten Erfassung der drei Feldvektorkomponenten. Das Feldvektor-Detektorarray 2 ist über einem zweidimensionalen Intensitätssensorarray (CCD, CMOS, FPA etc.) angeordnet und die einzelnen Detektorstrukturen 21 sind den Sensorelementen 11 des Intensitätssensorarrays 1 bezüglich des Pixelrasters angepasst zugeordnet. Die Zuordnung der Detektorstrukturen 21 zu den Sensorelementen 11 erfolgt bevorzugt pixelweise (d. h. in 1:1-Zuordnung), kann aber auch zu Gruppen von Sensorelementen 11, z. B. im 1:4, 1:9 etc.) vorgenommen sein, wobei ein so gruppenweise zugeordnetes Intensitätssensorarray 1 durch Binning von solchen Gruppen beschleunigt ausgelesen werden kann. Die Anordnung des Feldvektor-Detektorarray 2 ist üblicherweise im einfallenden Strahlungsbündel 55 (nur in Fig. 20-24 eingezeichnet) in einer Querschnittsebene angeordnet, kann aber - insbesondere in wenig oder nicht konvergierenden Strahlungsbündeln - auch geneigt angeordnet sein.

Die Anordnung der unterschiedlichen Detektorstrukturen 21 ist grundsätzlich frei wählbar und sollte einer bestimmten Regel folgen, um mit einem angepassten Scanschema jede Feldvektor-Detektorstruktur 21 für alle Pixel einer zweidimensionalen Bildaufnahme im Querschnitt eines zu messenden Strahlenbündels 3 aufeinanderfolgend zu positionieren. Die in Fig. 1 gezeigte Anordnung der Feldvektor-Detektorstrukturen 21 ist in drei großflächigen Bereichen 22, 23 und 24 mit jeweils einer einheitlichen Feldvektor-Detektorstruktur 21 versehen.

In dieser ausgewählten Ausführungsform belegen die unterschiedlichen Feldvektor-Detektorstrukturen 21 vorteilhaft jeweils einen Quadranten des Intensitätssensorarrays 1 und zwar im Bereich 22 mit einer Eₓ-Detektorstruktur 211 für die transversale Feldvektorkomponente in x-Richtung, im Bereich 23 mit einer E_{y}-Detektorstruktur 212 für die transversale Feldvektorkomponente in y-Richtung und im Bereich 24 mit einer E_{z}-Detektorstruktur 213 für die longitudinale Feldvektorkomponente und lassen einen Bereich 25 des Intensitätssensorarrays 1 frei (ohne Strukturbelegung zur Aufnahme von Referenzsignalen).

In Fig. 1 ist der zentrale Ausschnitt des Intensitätssensorarrays 1 nochmals als vergrößerte Detaildarstellung gezeichnet. Dieser Ausschnitt vereinigt auf engstem Raum alle verschiedenen Belegungsarten des Intensitätssensorarrays 1 und stellt einen gemischten Strukturbereich 27 dar, der dadurch eine schnelle Vergleichsmessung in allen Feldvektorkomponenten sowie die Aufnahme eines Referenzwertes ermöglicht.

Fig. 2 zeigt für die Belegung mit den unterschiedlichen Detektorstrukturen 211, 212, 213 eine weitere vorteilhafte Variante, bei der alle verschiedenen Detektorstrukturen 211, 212, 213 auf engstem Raum periodisch wiederkehrend angeordnet sind. Diese Form besteht somit aus einer geordneten Vielzahl von gemischten Strukturbereichen 27 und ist in ihrer Art der Pixelbelegung einer Bayer-Farbmaske nachgebildet. Diese Anordnungsart der Detektorstrukturen 211, 212, 213 kann in Analogie zur Farbbestimmung der drei Farbauszüge gemäß Bayer-Farbmaske mit einem entsprechenden Scan- und Ausleseschema betrieben und entsprechenden Auswertealgorithmen ausgewertet werden. Im konkreten Fall sind in jedem der gemischten Strukturbereiche 27 jeweils zwei gleiche aperturlose Spitzen 3 und zwei verschiedene Spitzen 41 und 42 für die unterschiedlichen transversalen Feldvektorkomponenten Eₓ und E_{y} vorhanden.

Fig. 3 zeigt eine zu Fig. 2 ähnliche Form mit gemischten Strukturbereichen 27, in denen jedoch jeweils eine Referenzstruktur 214 anstelle der zweiten aperturlosen Spitze 3 in jedem gemischten Strukturbereich 27 angeordnet ist. Die dabei eingesetzte Referenzstruktur 214 ist mindestens in der Höhe und Größe der Apertur den Detektorstrukturen 211 und 212 für die transversalen Feldvektorkomponenten angepasst, die vorzugsweise kreisrund und zentriert über dem Sensorelement 11 des Intensitätssensorarrays 1 angeordnet ist. Vorteilhaft ist auch die Höhe der Referenzstruktur 214 an die Detektorstrukturen 211 und 212 angepasst. Dadurch können etwaige Winkelabweichungen des Feldes des einfallenden Strahlungsbündels gegenüber den Detektorstrukturen 211 und 212 anschließend rechnerisch eliminiert werden. Generell ist es von Vorteil, wenn alle Detektorstrukturen 211, 212, 213 für die Feldvektorkomponenten sowie etwaige Referenzstrukturen dieselbe Höhe aufweisen.

Eine vierte Variante für die Strukturierung des Feldvektor-Detektorarrays 2 ist in Fig. 4 schematisch gezeichnet. Bei diese Variante ist wieder eine großflächig bereichsweise Anordnung von Bereichen 22, 23, 24 und 26 gezeichnet, bei der die Feldvektorkomponenten Eₓ, E_{y} und E_{z} in drei Quadranten angeordnet sind, während der vierte Quadrant vollständig mit Referenzstrukturen belegt ist, die bezüglich Gesamtform (nach oben verjüngt, "getapert") und Höhe sowie Aperturgröße an die Detektorstrukturen 211 und 212 für die transversalen Feldvektorkomponenten angepasst sind. Dabei ist die Referenzstruktur 214 zylinderförmig, obwohl die Detektorstrukturen 211 und 212 konisch geformt sind. Das spielt jedoch keine Rolle, da es vorrangig auf die gleiche Aperturgröße und deren zentrierte Lage ankommt. Der zentrale Bereich ist auch in diesem Beispiel ein gemischter Bereich 27, mit dem man die unterschiedlichen Detektorbereiche 22, 23, 24 mit der Referenzstruktur 214 auf engstem Raum zueinander kalibrieren kann.

Fig. 5 zeigt das Funktionsprinzip einer aperturlosen Spitze 3 als longitudinaler Plasmonresonanzempfänger. Mit der konisch geschlossenen Apex 33 eines geraden Kreiskegels kann diese Detektorstruktur 213 aufgrund lokalisierter Plasmonresonanz (LPR) lokalisierte Oberflächenpolaritonen (LSP) auf der Kegelachse aufnehmen. Da der Feldvektor von LSP radialsymmetrisch ist und es ebenfalls bekannt ist, dass LSP eine Anregung des longitudinalen Feldes an dem Apex 33 erzeugt, kann die Plasmonresonanz von der aperturlosen Spitze 3 aufgenommen werden, und infolge der konischen Form können Oberflächenplasmonpolaritonen (SPP) auf der äußeren Oberfläche der Spitze 3 (bzw. an dem Interface der Spitze 3 mit einem Umgebungsmedium) erzeugt werden, die von dem longitudinalen elektromagnetischen Feld eines einfallenden Strahlungsbündels angeregt werden.

Wenn die kegelförmige Detektorstruktur 213 als goldbeschichtete Spitze 3 auf einem dielektrischen Wellenleiter 31 hergestellt wurde, können die am Apex 33 angeregten SPP entlang der konischen Verbreiterung der metallischen Spitze 3 fortschreiten und an einem gewissen Radius resonant in den Wellenleiter 31 in einen photonischen Wellenleiter-Mode (WGM) einkoppeln. Der Wellenleiter 31 ist vorzugsweise ein Wellenleiterfasermaterial, das den photonischen WGM zu einem Sensorelement 11 des Intensitätssensorarrays 1 leitet, wo er als Photonenintensität detektiert wird.

Wie in Fig. 6 schematisch dargestellt, kann der Einkopplungsprozess der LSP und SPP dadurch unterstützt und zugleich ein Übersprechen (Crosstalk) auf benachbarte Spitzen 3 oder 4 unterdrückt werden, wenn außen auf die metallische Spitze 3 eine axialsymmetrische Dämpfungsschicht 34 unterhalb des bevorzugten Einkopplungsradius der Spitze 3 aufgetragen ist und vorzugsweise abwärts zunehmende Schichtdicke aufweist. In der Detaildarstellung von Fig. 6 ist entlang einer Schnittebene A-A der Aufbau der Detektorstruktur 213 aus Wellenleiter 31 (Kern), metallischer Spitze 3 und axialsymmetrischer Dämpfungsschicht 34 ersichtlich.

Für die Materialien der Detektorstruktur 213 sind dabei folgende Sachverhalte maßgeblich. Oberflächenplasmonpolaritonen und Oberflächenphotonpolaritonen werden, gleichgültig ob sie fortschreiten (SPP) oder lokalisiert (LSP) sind, an der Grenzfläche Metall - Dielektrikum (Wellenleiter 31) generiert. SPP sind in transversaler Richtung lokalisiert und klingen entlang ihrer Fortschrittsrichtung ab. LSP dagegen sind lokale Moden der metallischen Nanostruktur, die im Wesentlichen durch den Apex 33 der metallischen Spitze 3 gebildet wird.

Mit der so ausgestatteten metallbeschichteten Spitze 3 kann die longitudinale Feldvektorkomponente des elektromagnetischen Feldes separiert ausgekoppelt werden. Die aperturlose Spitze 3 hat im Unterschied zu den Spitzen 4, die eine Apertur 43 aufweisen und deren Aperturgröße die Auflösung limitiert, eine extrem hohe örtliche Auflösung, weil die Auflösung durch den Spitzendurchmesser bestimmt ist und dieser sogar kleiner als 1 nm hergestellt werden kann.

Das mit solchen aperturlosen Spitzen 3 sowie mit nachfolgend beschriebenen aperturtragenden Spitzen 4 gestaltete hochauflösende Feldvektor-Detektorarray 2 enthält grundsätzlich drei Arten von Materialien: Metall (Spitzen 3, 4), Dielektrikum (Wellenleiter 31) und Dämpfungsmaterial (Dämpfungsschichten 34, 45, 46). Die optischen Eigenschaften der Materialien sind durch ihre komplexe Dielektrizitätskonstante (elektrische Feldkonstante, Permittivität) definiert, die eine Real- und einen Imaginärteil aufweisen und von der Wellenlänge abhängig sind. Diese Materialien werden wie folgt beschrieben.

Der Begriff Metall bezeichnet ein Material, dessen Dielektrizitätskonstante einen negativen Realteil aufweist.

Der Begriff Dielektrikum bezeichnet ein Material, dessen Dielektrizitätskonstante einen positiven Realteil hat.

Der Begriff Dämpfungsmaterial bezeichnet ein Material, dessen Dielektrizitätskonstante einen positiven Realteil hat und einen Imaginärteil mit einem höheren Wert aufweist als der des Dielektrikums, auf das er beschichtet wurde. Der Imaginärteil der Dielektrizitätskonstante definiert die Wellenabsorption und folglich ist das Dämpfungsmaterial umso besser, je höher der Wert des Imaginärteil ist.

Somit kann dasselbe Material für verschiedene Wellenlängenbereiche Dielektrikum oder Dämpfungsmaterial sein und in unterschiedlichen Kombinationen zum Einsatz kommen. Beispielsweise ist Wolfram im nahinfraroten (NIR) und infraroten (IR) Spektralbereich als Metall, aber im sichtbaren Bereich (VIS) als gutes Dämpfungsmaterial einsetzbar. Ein anderes Beispiel sind transparente leitfähige Oxide (TCO), die Dämpfungsmaterialien im VIS sind, aber nach einer Dotierung als Metalle im NIR und IR Spektralbereich einsetzbar sind.

Deshalb ergeben sich bei den als Metall, Dämpfungsmaterial und Dielektrikum (bzw. Halbleiter oder Isolator) einsetzbaren Materialien Doppelbenennungen für einzelne Spektralbereiche des einfallenden Strahlungsbündels, die wie folgt benannt sein sollen.
- Metalle für den tiefultravioletten (DUV) und ultravioletten (UV) Bereich können sein: Aluminium (Al), Silber (Ag), Kobalt (Co), Indium (In), Gallium (Ga), Magnesium (Mg), Bismuth (Bi), Rhodium (Rh), Ruthenium (Ru), Wolfram (W), Titan (Ti), Chrom (Cr), Palladium (Pd), Kupfer (Cu), Platin (Pt), und Magnesium (Mg), GaMg Legierungen, Alkalimetalle Na, K etc. sowie Legierungen oder Kombinationen all dieser Metalle.
- Metalle für den VIS- bis IR-Spektralbereich können sein:
   Bevorzugt Gold (Au), Aluminium (Al), Silber (Ag), Platin (Pt); Kobalt-Silber-Legierungen; p-dotierte Halbleiter, wie Silicium (Si), Galliumnitrid (GaN), Galliumphosphid (GaP), Galliumarsenid (GaAs);
   n-dotierte Halbleiter, wie Si, SiGe, GaN, GaP, InP, GaAs;
   Si, GaN, GaP, hoch-Sn-dotiertes Indium-Zinn-Oxid (TCO), Ga-dotiertes ZnO, In-dotiertes Cadmiumoxid (ICO), Al-dotiertes Zinkoxid (AZO), ZnAl₂O₄, Gallium-Zink-Oxid (GZO), Tantal (Ta), Übergangsmetall-Nitride, Zirkoniumnitrid (ZrN), Graphene;
   Chrom (Cr), Iridium (Ir), Cobalt (Co), Nickel (Ni), Zink (Zn), Eisen (Fe), Edelstahl;
   RuO₂, TiAIN, TaN, ZrN, Zr₃N₄, YN, VN, NbN, CusN and WN;
   sowie Legierungen dieser Materialien.
- Metalle für den IR-Spektralbereich können sein:
   Siliciumcarbid (SiC), Perovskitoxide, wie SrTiOs, SrSnOs, Cd₃TeO₆, BaSnO₃ und
   SrGeO₃ BiFeO₃, BaFeO₃ und PbZrO₃;
- Wellenleiter 31 (Kern in den Spitzen 3, 4) für DUV, UV, VIS, NIR können sein:
   alle Sorten von Glas, Polymeren, Halbleitern und Dielektrika, die zu einem bestimmten Grad transparent für den jeweiligen Spektralbereich sind;
   Quartzglas, SiO₂, Glas, Saphir, GaN, GaAs or ZnO etc.
   Verschiedene Oxide und Fluoride: SiO₂, TiO₂, Al₂O₃, MgO, MgF₂, CaF₂ etc.;
   Gläser: Kronglas; Flintgläser etc., Chalcogenidgläser sowie Saphir, Diamant Polymere: SU8, PMMA etc. sowie alle Materialien im Abbe-Diagramm [siehe z.B. D. Malacara, Z. Malacara: Handbook of Optical Design, Second Edition, 2004, by Marcel Dekker, Inc., Fig. A3.2].
- Wellenleiter 31 (Kern in Spitzen 3, 4) für den IR-Bereich können sein:
   Germanium (Ge); Zinkselenid (ZnSe); Zinksulfid (ZnS); Silicium (Si), Calciumfluorid (CaF2);
   Chalcogenidgläser: Ge33As12Se55 (IG 2), Ge30Sb13Se32Te25, Ge30As13Se32Te25, Ge10As40Se50, Ge28Sb12Se60, As40Se60, As40S60, As2S3, As-Se-Te;
   Amorphe Materialien: AMTIR-1, AMTIR-2, AMTIR-3, AMTIR-4, AMTIR-5, AMTIR-6, C1; IG 2, IG 3, IG 4, IG 5, IG 6; IRG 22, IRG 23, IRG 24, IRG 25, IRG 26; BD-2, BD-6;
   OPTIR-1, OPTIR-3; (letztere Abkürzungsangaben sind zum Teil nur unterschiedliche Namen für gleiche Materialien verschiedener Hersteller)
- Dämpfungsmaterialien (der Außenschichten der Spitzen 3, 4 und der streifenförmig gegenüberliegenden Innenschichten der Spitzen 4) für VIS bis NIR können sein:
   alle Arten von Material, die einen höheren Imaginärteil der Dielektrizitätskonstante als der des Dielektrikums, auf das sie beschichtet sind, aufweisen;
   Kohlenstoff (C); Molybdän (Mo); Wolfram (W); Titan (Ti), Chrom (Cr);
   verschiedene Metalloxide, wie Cu₂O, CuO, MgO, Al₂O₃ etc.,
   alle Metalle, die als Metall für DUV-UV benannt sind, außer Silber und Aluminium.
- Umgebungsmedium für die Spitzen 3, 4 können sein:
   dielektrische Medien (Flüssigkeit oder Gas), deren Dielektrizitätskonstante einen positiven Realteil hat, der kleiner als der des Wellenleiter-Materials der aperturlosen Spitze 3 ist.
- falls Schutzschichten für Detektorarrays erforderlich sind, können diese aus einem Dielektrikum sein, dessen Dielektrizitätskonstante einen positiven Realteil aufweist.

In Fig. 7 ist eine Detektorstruktur 211, 212 für die transversalen Feldvektorkomponenten des elektromagnetischen Feldes des einfallenden Strahlungsbündels dargestellt. Sie enthält eine metallische Spitze 4, die am Apex 44 eine Apertur 43 aufweist, aber ansonsten dem Aufbau der metallischen Spitze 3 gleicht, indem die jeweilige Spitze 4 ebenfalls außerhalb eine Dämpfungsschicht und im Innern ein Dielektrikum (Wellenleiter 31) sowie zusätzlich an der Grenzschicht zwischen Dielektrikum und Spitze 4, die axial gegenüberliegende Dämpfungsstreifen aufweist. Außerdem gelten in den Spitzen 4 die gleichen Materialien, wie sie oben für die Spitzen 3 genannt sind.

Die angeordnete Apertur 43 wird durch den gekürzten Apex 44 der metallischen Spitze 4 gebildet und ermöglicht die Erzeugung des fundamentalen Wellenleitermodes (WGM). Die dominante Komponente des elektrischen Feldes dieses Modes kann jede beliebige Richtung in der x-y-Ebene (orthogonal zur Axialrichtung der Spitze 4) einnehmen, d.h. er kann angeregt werden durch das Feld der lokalisierten Plasmonen an der Apertur 43, die ein elektrisches Feld beliebiger Richtung in der x-y-Ebene haben.

Der Wellenleiter 31 als innerer Kern der Spitze 4 kann so konstruiert sein, dass der WGM, der durch den Apex 44 angeregt wird, eine dominante Feldrichtung aufweist, die mit derjenigen der lokalisierten Oberflächenplasmonen (LSP) an der kurzen Halbachse der speziell elliptisch geformten Apertur 43 übereinstimmt, wie sie in der linken Draufsicht als Detailabbildung für die Ebene B-B gezeichnet ist. Wird die Apertur 43 noch weiter gestreckt und als schmaler Spalt, wie in der rechten Draufsicht der Detailzeichnung in der Ebene B-B dargestellt ist, ausgeführt, ergibt sich eine noch bessere Selektivität für eine der Feldvektorkomponenten Eₓ oder E_{y}, je nachdem, welche dieser Feldvektorkomponenten Eₓ oder E_{y} zur Längsausrichtung der spaltförmigen Apertur 43 quer ausgerichtet ist.

Ist die speziell strukturierte Spitze 4 nicht bereits mit einer langgestreckten Apertur 43 (Ellipse, Rechteck, Spalt etc.) ausgestattet oder soll die Polaritätsselektivität noch weiter verbessert werden, kann noch ein weiteres Merkmal zur effektiven Selektion (Filterung) einer gewünschten Feldvektorkomponenten Eₓ oder E_{y} am Apex 44 mit der Apertur 43 hinzugenommen werden. Für eine hohe Polarisationsselektivität sollten die aperturtragende Spitze 4 nicht nur eine Apertur 43 mit einer Asymmetrie in der Form oder Struktur haben, sondern weiterhin an zwei gegenüberliegenden Seiten des konischen Wellenleiters 31 (Kern) an der Grenzfläche zur Spitze 4 mit streifenförmigen Dämpfungsschichten 45 belegt sein, die die plasmonischen oder photonischen Modes im Wellenleiter 31 für eine der transversalen Feldvektorkomponenten Eₓ oder E_{y} dämpfen.

Nach dieser Belegung des konisch geformten dielektrischen Wellenleiters 31 mit den zwei einander axialsymmetrisch gegenüberliegenden Dämpfungsschichten 45, wie sie in Fig. 8 gezeichnet sind, wird die metallische Spitze 4 so aufgebracht (z.B. Beschichtung durch Bedampfen, Sputtern etc.), dass der Apex 44 offenbleibt (beispielsweise durch Abdecken während der Beschichtung mit dem Metall). Der Apex 44 zeigt in den Detailansichten von der Ebene C-C aus Fig. 8 zwei Draufsichten möglicher Formen der Apertur 34, in der der Wellenleiter 31 sowie die symmetrisch oben erwähnten zwei gegenüberliegenden Dämpfungsschichten 45 sichtbar sind. Die Detaildarstellung zeigt zwei Draufsichten für zwei mögliche Varianten, wie die Apertur 43 und der Apex 44 geformt sein können. Die untere Draufsicht hat eine kreisförmige Apertur 43 mit halbmondförmigen Querschnittsflächen der Dämpfungsschichten 45 in einem ebenfalls nahezu kreisförmigen Apex 44. Die obere Draufsicht weist eine elliptische Form der Apertur 43 und des Apex 44 auf, wodurch die Apertur 43 quer zur Richtung der zu detektierenden Feldvektorkomponente Eₓ länger gestaltet ist und in der kürzeren Ausdehnung der Apertur 43 als elektrischer Dipol wirkt und so eine höhere Anregungseffizienz von Plasmonen erreicht, die im Wellenleiter 31 als SPP und WGM eingekoppelt werden kann.

Die in der Detaildarstellung von Fig. 8 gezeichneten Detektorstruktur 212 für die Feldvektorkomponente E_{y} ergibt sich für die Detektorstruktur 211 für die Feldvektorkomponente Eₓ in gleicher Form, aber um die Symmetrieachse der Spitze 4 um 90° gedreht. Damit ist die Polarisationsselektivität für die zwei transversalen Feldvektorkomponenten Eₓ, E_{y} hergestellt. Für konkrete Ausgestaltung der Form und Anpassung von Detektorstrukturen 211, 212 gibt es allerdings noch eine Vielzahl von weiteren Möglichkeiten, die in den nachfolgenden Zeichnungen der Fig. 9, 10, 15, 16, 17 und 18 beispielhaft angegeben sind.

Fig. 9 zeigt eine Ausführung der Detektorstrukturen 211, 212 für die Feldvektorkomponente Eₓ - ohne Beschränkung auf diese - mit einer anderen "getaperten" Ausführung der Spitze 4 in Form eines quadratischen Pyramidenstumpfes, wobei das Material der metallischen Spitze 4 an den beiden sichtbaren Pyramidenseiten aufgebrochen dargestellt ist. Bei dieser Variante vereinfacht sich die Aufbringung der zwei gegenüberliegenden Dämpfungsschichten 45 zu ebenen streifenförmigen Schichten und eine Anpassung an üblicherweise quadratische bis rechteckige Sensorelemente 11 eines Intensitätssensorarrays 1 ist vollständig möglich. In der Detaildarstellung von Fig. 9 entlang der Ebene D-D sind zwei mögliche Gestaltungen der Apertur 43 bei gleichem quadratischem Apex 44. Die linke Apertur 43 ist dabei fast ideal quadratisch mit den gegenüberliegenden im Querschnitt sichtbaren Dämpfungsschichten 45. Die rechte Draufsicht auf den Apex 44 zeigt eine Variante mit einer durch einen Metallstreifen 48 geteilten Apertur 43. In diesem Fall wird berücksichtigt, dass die LSP-Anregung ein Resonanzprozess ist, der von der Wellenlänge abhängt, und somit die Resonanz von der Größe, Geometrie und Form der Apertur beeinflusst wird. Durch eine Änderung der Größe (resonanzwirksamen Dimension der Apertur) der Geometrie (Aspektverhältnis) und/oder Form (Flächenform) kann die Anregungseffizienz beeinflusst werden. Wie in Fig. 9, Teilabbildung D-D als Draufsicht dargestellt ist, kann die Apertur 43 sowohl eine quadratische als auch rechteckige Formen annehmen.

In der rechten Darstellung von Teilabbildung der Draufsicht D-D ist eine Apertur 43 gezeigt, die eine quadratische Grundform mit einem Metallstreifen 48 als Unterteilungssteg aufweist, wodurch die Apertur 43 in drei rechteckige Bereiche unterteilt ist, die vorzugsweise nicht gleich breit sind. Mit dieser Art Apertur 43 können vier Resonanzen empfangen werden, eine mit der vollen Aperturbreite, eine mit der Breite des Metallstreifens 48 und zwei mit den beiden freien rechteckigen Aperturabschnitten links und rechts vom Metallstreifen 48. Dadurch wird die Aufnahmeeffizienz der LSP gesteigert, weil vier Resonanzmaxima bezüglich der einfallenden Wellenlänge empfangen werden können. Da sich auch einige der Resonanzen überlappen können, ergibt sich insgesamt ein höheres Maximum im LSP-Anregungsspektrum.

Die Darstellung der Detektorstrukturen 211, 212 in Fig. 10 ist für die Feldvektorkomponente E_{y} gezeichnet (wieder ohne auf diese beschränkt zu sein) und hat bei quadratischer Grundfläche eine rechteckige Apertur 43 und einen rechteckigen Apex 44. Die streifenförmig gegenüberliegend am Wellenleiter 31 aufgebrachten Dämpfungsschichten 45 sind an den kurzen Seiten der rechteckigen Apertur 43 sichtbar. Das größere Aspektverhältnis der Apertur 43 gestattet eine bessere Richtungsselektivität für die in Fig. 10 beispielhaft gezeigte, in einer Dimension quer zur Feldvektorkomponente E_{y} langgestreckte Rechteckform der Apertur 43, an deren kurzen Seiten die Dämpfungsschichten 45 für die starke Dämpfung der Feldvektorkomponente Eₓ sorgen, sodass die Apertur 43 die Feldvektorkomponente E_{y} als SPP-Resonanz zwischen den beiden langen Rechteckseiten entlang der vollen Länge der Öffnung einfangen kann, was aber zulasten der räumlichen Auflösung geht. Der Widerspruch zwischen hoher Polarisationsselektivität, hoher Detektionseffizienz einerseits und dem Auflösungsverlust anderseits, kann dadurch entgegengewirkt werden, dass die Form der rechteckigen Apertur 43 zu einem schmalen Spalt entartet, wie es beispielsweise in der linken Detailabbildung B-B gezeichnet ist.

Fig. 11 stellt einen Ausschnitt aus dem Feldvektor-Detektorarray 2 dar, bei dem in einem Vertikalschnitt die drei unterschiedliche Detektorstrukturen 211, 212, 213 für die transversalen Feldvektorkomponenten Eₓ, E_{y} und die longitudinale Feldvektorkomponente E_{z} schematisch als aperturlose Spitzen 3 und zwei individuell nach Feldvektorkomponenten Eₓ, E_{y} als um 90° zueinander verdrehte Arten von Spitzen 41 und 42 gezeichnet sind. In dieser Ausführungsform der Erfindung ist der nanostrukturierte Feldvektor-Detektorarray 2 unmittelbar auf dem Intensitätssensorarray 1 in direkter räumlicher Zuordnung der Spitzen 3, 41 und 42 über den Sensorelementen 11 des Intensitätssensorarrays 1 aufgebracht. Das kann monolithisch bei der Chipherstellung erfolgen, wie hier in Fig. 11 angenommen. Die in Fig. 11 als oberste Schicht des Intensitätssensorarrays 1 gezeichnete Schutzschicht 12 ist nur als optional zu betrachten und für diejenigen Fälle angezeigt, wenn die Oberfläche der Sensorelemente 11 nicht von anderen Elementen abgedeckt ist.

In Fig. 12 wurde bei gleicher Struktur des Feldvektor-Detektorarrays 2, wie in Fig. 11 beschrieben, als Wellenleiter ein Halbleiter 32 verwendet und eine andere Art der Intensitätsmessung der im Wellenleitermode (WGM) transportierten Photonen gewählt worden. Als Intensitätssensorarray 1 wird in diesem Ausführungsbeispiel das Feldvektor-Detektorarray 2 direkt auf ein Schottky-Dioden-Array aufgesetzt bzw. monolithisch auf einem solchen hergestellt. Damit wird die Intensitätsmessung durch eine Hot-Carrier-Detektion in separate elektrische Signale je Detektorstruktur 211, 212, 213 umgesetzt.

Fig. 13 zeigt alternativ zu der Zusammenfügung von Intensitätssensorarray 1 und Feldvektor-Detektorarray 2 nach Fig. 11 ein durch nachträgliches Aufsetzen eines zuvor auf einem separaten Substrat 28 hergestellten Feldvektor-Detektorarrays 2, bei dem mittels genau definierter Abstandshalter 13 die Zusammensetzung von Intensitätssensorarray 1 und Feldvektor-Detektorarray 2 erfolgt. Infolge des (zwar geringen) Abstandes zwischen der Schutzschicht 12 und somit der einzelnen Sensorelemente 11 des Intensitätssensorarrays 1 und dem Substrat 28 des Feldvektor-Detektorarrays 2 entsteht ein Spalt eines Zwischenmediums (oder ggf. Vakuum), in das ein Photonenstrahl aus dem Wellenleiter 31 divergent austreten würde, sodass die separaten Photonenstrahlen, wie in Fig. 13 vorgesehen, durch ein strahlformendes optisches Array 29 gebündelt, bestenfalls kollimiert oder optisch abgebildet werden sollten, um ein Übersprechen auf benachbarte Sensorelemente 11 oder unnötigen Intensitätsverlust zu vermeiden. Entlang der Grenzflächen zwischen dem Wellenleiter 31 und den Spitzen 3, 41 oder 42 können Gitterstrukturen 47 angebracht sein, die zur Verbesserung der Anregung des SPP und WGM dienen. Sie können als strahlformende Elemente wirken.

In einer weiteren Ausführung der Erfindung sind - wie in Fig. 14 gezeigt - das Feldvektor-Detektorarray 2 und das Intensitätssensorarray 1 voneinander vollkommen getrennt und die Photonendetektion aus den Wellenleitern 31 ist über ein zu messenden Multistrahlbündel 56 in Freistrahloptik realisiert. Unter Freistrahloptik sollen in diesem Zusammenhang alle optisch abbildenden Übertragungsvarianten verstanden werden, die das Multistrahlbündel 56 von den Ausgängen der Wellenleiter 31 in direkter "pixelweise zugeordneter" Abbildung auf das Intensitätssensorarray 1 übertragen, wie beispielsweise durch kollimierte Bündel, optische Abbildung etc., wobei die Abbildung der Wellenleiterausgänge auf zugeordnete Sensorelemente 11 im Verhältnis 1:1 (pixelweise), 1:(2x2), 1:(3x3), o.ä. bei quadratischen Sensorelementen 11 oder angepasst an rechteckige Sensorelemente 1:(2x3), 1:(3x4), 1:(4x5) usw. gewählt werden kann.

Dabei soll das zu messende Multistrahlbündel 56 als eine beliebige optische Übertragung der Photonenintensitäten pro Detektorstruktur 211, 212, 213 und gegebenenfalls von weiteren Referenzstrukturen 214, wie zu Fig. 3 und Fig. 4 beschrieben, unter Wahrung einer zum Pixelraster des Intensitätssensorarrays angepassten Pixelzuordnung, wie sie für den direkten Kontakt des Feldvektor-Detektorarrays 2 zum Intensitätssensorarray 1 gemäß Fig. 11 bis 13 als bevorzugte 1:1-Zuordnung angegeben ist, verstanden werden. Das kann zum einen über einen kollimierten Strahlengang mit optischen Elementen, wie Spiegeln (nicht gezeichnet), Strahlteilern 51 (nur in Fig. 22- 25 dargestellt) oder auch ohne solche erfolgen. Zum anderen sind auch optische Abbildungen der Ausgänge der Wellenleiters 31 auf die Sensorelemente 11 des Intensitätssensorarrays 1 möglich. Für diese Übertragung des zu messenden Multistrahlbündels 56 sind in Fig. 14 als strahlformendes optisches Array 29 am Substrat 28 einige optische Elemente beispielhaft angedeutet, die in einem am Substrat 28 integrierten Mikrolinsenarray (wie in Fig. 13 gezeigt) bestehen können, oder die, wie in Fig. 14 schematisch dargestellt, als GRIN-Linsen auf dem Substrat 28 eingelassen sind oder aber als separate Linsen an der Substratunterseite angebracht sein können. In jedem Fall sind die Elemente des strahlformenden optischen Arrays 29 nicht nur - wie in Fig. 14 gezeigt - auf eine Kollimation der Mikrostrahlenbündel 56 beschränkt, sondern es können auch konvergierende und divergierende optische Abbildungs- strahlengänge vorgesehen sein, die über den tatsächlichen Übertragungsweg mit etwaigen weiteren optischen Elementen eine optisch scharfe Abbildung auf das Intensitätssensorarray 1 realisieren und/oder eventuell einen von der pixelweisen 1:1 -Abbildung abweichenden Abbildungsmaßstab zwischen Feldvektor-Detektorarray 2 und Intensitätssensorarray 1 aufgrund der gewählten Zuordnung der einzelnen Detektorstrukturen 21 zu den Sensorelementen 11 berücksichtigen.

In Fig. 15 sind noch weitere Strukturdetails der Apertur 43 tragenden Spitzen 4 gezeigt, ohne dass eine Festlegung auf eine der transversalen Feldvektorkomponenten Eₓ, E_{y} erfolgt ist, da diese durch 90°-Drehung um die Symmetrieachse der Spitzen 4 einfach geeignet anzupassen ist. In Fig. 15 sind die Teilabbildungen (a), (b) und (c) auf Formen der Spitzen 4 zugeschnitten, bei denen die Grundform der Spitze 4 nahezu zylindrisch ist, sodass der Apex 44 eine erhebliche ebene Fläche mit einer relativ kleinen Apertur 43 darstellt. Dasselbe ergibt sich, wie in Teilabbildung (c) gezeichnet, wenn die metallische Spitze je nach Art des verwendeten Metalls sehr dickwandig gestaltet ist. Für diese Fälle sieht die erfindungsgemäße Strukturierung der Spitzen 4 an der ebenen Fläche des Apex 44 eine oder mehrere zusätzliche Dämpfungsschichten 46 aufzutragen. Das kann entweder an allen Oberflächen, der Außenseite, der Innenseite des Apex 44 sowie an der Innenwand der Apertur 43 erfolgen. Dazu zeigt Teilabbildung (a) die volle Beschichtung aller vorgenannten Oberflächen, Teilabbildung (b) nur den Auftrag auf die Außen- und die Innenseite des Apex 44 und Teilabbildung (c) ausschließlich die Belegung mit einer Schicht auf der Außenseite des Apex 44 sowie deren nahtloser Übergang in die normalen zweistreifig gegenüberliegenden Dämpfungsschichten 45 an der Grundform der Spitze 4.

In Fig. 16 sind dann noch mögliche Formen der Ausbildung der zusätzlichen Dämpfungsschichten 46 gezeigt, eine ovale, streifenförmige oder dreieckförmige Fläche der metallischen Oberfläche des Apex 44 in den Teilabbildungen jeweils mit Spitze 4 bezeichnet und die schwarze Belegung stellt die zusätzlichen Dämpfungsschichten 46 dar. In allen Beispielfällen ist die Apertur 43 selbst als kreisrunde bzw. zylindrische Öffnung unveränderter Größe gezeigt. Dies ist jedoch nur der Übersichtlichkeit der Gestaltung der Dämpfungsschichten 46 geschuldet und die Apertur 43 wie auch der Apex 44 kann in gleicher Weise wie in bereits oben beschriebenen Beispielen von quadratisch bis rechteckig und kreisförmig bis elliptisch geformt sein.

Fig. 17 zeigt das Innere einer plasmonischen Detektorstruktur 211 oder 212 ohne die darüber befindliche metallische Spitze 4, wobei letztere deshalb weggelassen wurde, um eine besondere Strukturierung des Wellenleiters 31 an axial gegenüberliegenden Seiten der kegelmantelförmigen Grenzfläche unterhalb der metallischen Spitze 4 zu zeigen. Diese besondere Strukturierung besteht in einer Gitterstruktur 47, die in den Bereichen eingebracht wurde, die zwischen den gegenüberliegenden streifenförmigen Dämpfungsschichten 45 frei sind. Die Gitterstruktur 47 dient vorrangig zur Verbesserung der Kopplung zwischen der LSP und inneren SPP und dem WGM, aber auch zur Kollimation des WGM in Richtung des Sensorelements 11 des Intensitätssensorarrays 1.

Nach dem Bedecken mit dem Material der metallischen Spitze 4 wird die elektrische Feldvektorkomponente der inneren SPP und des WGM in der Axialebene der streifenförmigen Dämpfungsschichten 45 stark gedämpft, sodass allein die elektrische Feldvektorkomponente orthogonal zur Axialebene der Dämpfungsschichten 45 selektiert wird. Mittels der Gitterstruktur 47 werden die LSP und der WGM besser gekoppelt und zusätzlich der aus dem WGM resultierenden Photonenstrahl zu formen.

In Fig. 18 sind ergänzend noch Varianten mit verkürzter (Teilabbildungen a und b) oder verlängerter (Teilabbildungen c und d) metallischer Spitze 4 gegenüber der Höhe des Wellenleiters 31 und/oder der Höhe der zwei gegenüberliegenden Dämpfungsschichten 45 gezeigt. Solche Unterschiede können im Herstellungsprozess entstehen und führen zu Höhenunterschieden, die nur marginal die Brauchbarkeit der fehlerhaft gefertigten Spitzen 4 beeinträchtigen. In der Teilabbildung (d) von Fig. 18 sind auch die Dämpfungsschichten 45 in gleicher Höhe über die Apertur 43 des Wellenleiters 31 verlängert. Diese Ausbildung der Spitze 4 kann sogar einen positiven Effekt bei der polarisationsselektiven Anregung der LSP und Einkopplung in die SPP und WGM.

In Fig. 19 ist eine weitere Ausgestaltung der Erfindung für Zwecke einer zusätzlichen Bestimmung von Polarisationszuständen, vor allem transversalen Feldvektorkomponenten, die nicht ausschließlich in der Vorzugsrichtung der kartesisch definierten Feldvektoren liegen, in mehreren Varianten dargestellt. So zeigen die Teilabbildungen (a), (d), (e) solche gemischten Strukturbereiche 27 (wie sie zu den Fig. 1 bis 4 als quadratische Viererbereiche von Detektorstrukturen 211, 212, 213, 214 definiert worden sind), mit denen ausschließlich transversale Feldvektorkomponenten detektiert werden. Dabei sind aber neben den kartesischen transversalen Feldvektorkomponenten Eₓ, E_{y} (mit 0°- und 90°-Winkeln) zusätzlich Polarisationsrichtungen in die Detektorstrukturen als anders orientierte Spitzen 4 unter 45° und 135° in die gemischten Strukturbereiche 27 aufgenommen. Die Teilabbildungen (b) und (c) zeigen dagegen Kombinationen zwischen der longitudinalen Feldvektorkomponente E_{z} und jeweils einer Polarisationsrichtung der kartesischen Feldvektorkomponenten Eₓ oder E_{y} sowie den dazwischenliegenden 45°- und 135°-Feldvektorkomponenten.

Eine weitere Möglichkeit ist noch als Besonderheit in den Teilabbildungen (d) und (e) enthalten, indem der dort gewählte gemischte Strukturbereich 27 jeweils ein Referenzelement enthält, das einerseits ein strukturfreier Bereich 25 oder andererseits eine Referenzstruktur 214 sein kann.

Fig. 20 zeigt die Detektion von LSP am Apex 33 der aperturlosen Spitzen 3 sowie dem Apex 44 der aperturtragenden Spitzen 41 und 42. Das hier gezeigte Detektionsprinzip basiert auf dem Seebeck-Effekt, der die direkte Umwandlung von Wärme in Elektrizität an der Verbindungsstelle zwischen zwei unterschiedlichen metallischen Drähten beschreibt. Der jeweilige Apex 44 enthält für die polarisationsselektive LSP-Anregung metallische Partikel, die mittels derer das einfallende elektrische Feld die LSP erzeugen kann.

Der in den vorigen Beispielen im Kern der Detektorstrukturen 211 und 212 befindliche Wellenleiter 31 hat hier die Funktion eines elektrischen Isolators 36, der im Zentrum einen axialen Metalldraht 49 und außen - wie bisher - die axialsymmetrischen streifenförmigen Dämpfungsschichten 45 aufweist und mit metallischen Partikeln des Apex 44 der ummantelnden Spitzen 3 bzw. 4 elektrisch kontaktiert ist. Der Metalldraht 49 muss aus einem zu den Beschichtungen der für die Detektorstrukturen 211, 212, 213 verwendeten Metallisierungen (Spitzen 3, 41, 42) verschiedenen Metall bestehen, um eine Kontaktstelle im Sinne eines Thermoelements zur Messung des Energieeintrags durch die plasmonische Anregung am Apex 33 oder den Apizes 44 zu bilden, dessen temperaturabhängige Stromänderungen dann mittels eines I/U-Wandlers 35 je Detektorstruktur 211, 212, 213 (pixelweise) gemessenen werden können.

Im Fall der Detektorstruktur 213 erfolgt gemäß Fig. 20 die Kontaktierung des axialen Metalldrahtes 49 direkt im Zentrum des Apex 33 der aperturlose Spitze 3, wodurch der thermische Kontakt direkt entsteht.

Bei den transversalselektiven Detektorstrukturen 211 und 212 muss der durch die Apertur 43 offene Apex 44 vom Metalldraht 49 aus jeweils mit metallischen Partikeln bis zur metallischen Spitze 41 oder 42 elektrisch kontaktiert werden. Das geschieht gemäß den Teilabbildungen (a) und (b) mittels einer Ablagerung von metallischen Partikeln auf dem Isolator 36 innerhalb der Apertur 43. In den Teilabbildungen (a) und (b) von Fig. 21 sind die metallischen Partikel als eine metallische Aperturbeschichtung 431, die den sonst durch die Apertur 43 freigelassenen Isolator 36 in diesem Beispiel vollflächig abdeckt, ausgeführt. Die Kontaktierung des axialen Metalldrahtes 49 erfolgt unmittelbar durch das Auftragen der Aperturbeschichtung 431 und außen direkt über die Berührungskanten mit den metallischen Spitzen 41 bzw. 42.

Die in der Teilabbildung (c) gezeigte Variante stellt nochmals eine Modifizierung gegenüber den Teilabbildungen (a) und (b) dar, bei der die Detektorstrukturen 211 und 212 als Besonderheit keine vollständige metallische Spitze 41 oder 42 aufweisen. Die Kontaktierung des axialen Metalldrahtes 49 erfolgt hier über mindestens einen, vorzugsweise - wie in Teilabbildung (c) gezeigt - zwei symmetrisch angeordnete, Metallstreifen 48 entlang jeweils einer Seitenlinie der konischen Außenfläche des Isolators 36 bis auf das Substrat 28, wo die Metallstreifen 48 jeder Detektorstruktur 211, 212, 213 mit jeweils einem I/U-Wandler 35 verbunden sind.

Die Kontaktierung des axialen Metalldrahtes 49 über die zwei axialsymmetrisch gegenüberliegenden Metallstreifen 48 kann - falls die an die Aperturbeschichtung 431 gegenüberliegend angrenzenden Dämpfungsschichten 45 elektrisch leitend sind (z.B. aus Kohlenstoff oder einem gut leitenden Metall, wie oben zu Fig. 7 und Fig. 8 angegeben) - an diesen Dämpfungsschichten 45 beginnen und entlang der Außenseite des konisch ausgebildeten Isolators 36 angebracht sein, um den zweiten Kontakt des Thermoelements zwischen der Aperturbeschichtung 431 und einem Kontakt am Substrat 28 zur Messung eines Thermostromes über den axialen Metalldraht 49 mittels des I/U-Wandlers 35 (nur in Fig. 20 gezeigt) herzustellen.

In Fig. 21 sind auch noch mögliche Gestaltungsvarianten des Apex 33 der aperturlosen Spitze 3 und des Apex 44 der Spitzen 41 und 42 für die transversalen Feldvektorkomponenten Eₓ, E_{y} gezeichnet. Die Aperturbeschichtungen 431 sind wie die Aperturen 43 aller vorherigen Beispiele bei den Detektorstrukturen 211 und 212 um 90°zueinander gedreht und zeigen genauso den Abschluss am Isolator 36 der axialsymmetrisch gegenüberliegen Dämpfungsschichten 45 zur Selektion der unterschiedlichen transversalen Feldvektorkomponenten Eₓ, E_{y}. Die als Kontaktierung des Metalldrahtes 49 vorhandene Aperturbeschichtung 431 kann wie in den Teilabbildungen (a) und (b) als Ellipsen- und Rechteckform sichtbar, wiederum die bereits oben für die Aperturen 43 beschriebenen Größen, Geometrien und Formen annehmen.

Durch die Aperturbeschichtungen 431 entstehen an den Apizes 44 aufgrund der Kontaktierung mit metallischem Außenmaterial der Detektorstrukturen 211, 212, 213, d.h. Spitzen 41, 42 oder Metallstreifen 48, jeweils über eine mindestens teilweise ausfüllende Ausführung der Aperturbeschichtung 431 die zur Messung verwendeten Verbindungsstellen als thermischer Kontakt, dessen Thermostrom zwischen dem axialen Metalldraht 49 und der an der konischen Außenfläche des Isolators 36 vorliegenden Metallisierung mittels eines I/U-Wandler 35 pixelweise als elektrisches Signal gemessen werden kann.

Die tatsächlichen Vorteile der vorliegenden Erfindung treten in den folgenden Ausführungsbeispielen zur vollständigen Bestimmung des elektromagnetischen Feldes zutage, indem zusätzlich zur separaten Amplitudenmessung jeder der einzelnen Feldvektorkomponenten Eₓ, E_{y}, E_{z} auch noch deren Phasenlagen bestimmt werden können.

### Zwei-Schritt-Detektion von Amplitude und Phase

In Fig. 22 ist eine Detektionseinrichtung 5 zur Phasenbestimmung mittels einer Zwei-Schritt-Detektion dargestellt. Dabei wird ein nahezu homogener und kohärenter Laserstrahl mit einem Strahlteiler 51 in Mess- und Referenzstrahl aufgeteilt, wobei in mindestens einem der Strahlen eine Polarisationssteuerung 52 durchlaufen wird. Der Messstrahl durchquert ein zu analysierendes Messobjekt 54, das eine einfache Linse, ein komplexes optisches System, ein diffraktives optisches Element, ein optisches Gitter, ein holografisches Element, asphärische Linsen, biologische Proben, beliebige Medien oder Materialien, die Amplitude, Phase oder Polarisation eines Lichtstrahls beeinflussen oder mit ihm wechselwirken, etc. sein kann. Dabei kann der Strahl direkt, oder mit einer (bekannten) Linse fokussiert, bezüglich der Punktbildverwaschungsfunktion (PSF) gemessen werden, um die PSF oder die Modulationsübertragungsfunktion (MTF) zu charakterisieren.

Das vom Messobjekt 54 kommende auf das Feldvektor-Detektorarray 2 einfallende Strahlungsbündel 55 wird von den Detektorstrukturen 211, 212, 213 selektiv, gegebenenfalls kalibriert mit Referenzstrukturen 214 gemäß Fig. 1 bis Fig. 4, durch lokalisierte Plasmonresonanz (LSP), Oberflächenplasmonpolaritonen (SPP) über einen photonischen Wellenleiter-Mode (WGM) hochaufgelöst in Feldvektorkomponenten je Detektorstruktur 211, 212, 213 aufgenommen und als zu messendes Multistrahlbündel 56 auf das Intensitätssensorarray 1 übertragen. Das zu messende Multistrahlbündel 56 wird in diesem vereinfachten Beispiel am Substrat 28 des Feldvektor-Detektorarrays 2 durch ein strahlformendes optisches Array 29 gebildet und überträgt so vorzugsweise kollimiert das plasmonisch angeregte, komponentenselektiv gewandelte Strahlenbündel 55 als Multistrahlenbündel 56 in Freistrahloptik über einen Strahlteiler 51 auf das Intensitätssensorarray 1, wobei bevorzugt eine pixelweise Zuordnung zu den Sensorelementen 11 vorgesehen ist.

Dabei erfolgt die Amplitudenmessung in den Zeitintervallen, in denen ein Chopper 6, der im Referenzstrahl 57 vor dem strahlkombinierenden Strahlteiler 51 vor dem Intensitätssensorarray 1 angeordnet ist, geschlossen ist, während bei geöffneten Chopper 6 der Referenzstrahl 57 den Strahlteiler 51 passiert und zusammen mit dem zu messenden Multistrahlbündel 56 auf das Intensitätssensorarray 1 trifft, sodass die Phasenbestimmung stattfinden kann. Im Messstrahl kann nach der Polarisationssteuerung 52 ein zweiter Chopper 6 vorhanden sein, um mehr Flexibilität bei den Referenzmessungen zu haben.

### Homodyn-Detektion von Amplitude und Phase

Eine weitere Möglichkeit zur Amplituden und Phasenmessung ist in Fig. 23 in Form eines Homodyn-Interferometers vom Michelson-Typ gezeigt. Ein Laserstrahl wird wie im vorherigen Beispiel an einem Strahlteiler 51 aufgeteilt in Messstrahl und Referenzstrahl 57, wobei der Referenzstrahl 57 über einen Referenzspiegel 58 in Richtung des Intensitätssensorarrays 1 reflektiert wird. Der Messstrahl durchquert wie im vorigen Beispiel ein Messobjekt 54 und liefert das zu analysierende einfallende Strahlungsbündel 55 für das Feldvektor-Detektorarray 2, dessen zu messendes Multistrahlbündel 56 mit dem strahlkombinierenden Strahlteiler 51 mit dem Referenzstrahl 57 auf dem Intensitätssensorarray 1 überlagert wird. Die Bestimmung der Phase erfolgt über eine oder mehrere einzelne Positionseinstellung des Referenzspiegels 58.

### Pseudo-Heterodyn-Detektion von Amplitude und Phase

Eine weitere Detektionseinrichtung 5 zur Phasenbestimmung ist als Pseudo-Heterodyn-Interferometer aufgebaut. Ein Laserstrahl wird wie im vorigen Beispiel in Messstrahl und Referenzstrahl 57 aufgeteilt, wobei der Referenzstrahl 57 über einen oszillierbaren Referenzspiegel 58 verfügt. Der Messstrahl, der am Messobjekt 54 in das zu analysierende einfallende Strahlungsbündel 55 gewandelt wird, kann in der vorbeschriebenen Weise am Feldvektor-Detektorarray 2 selektiv in Feldvektorkomponenten Eₓ, E_{y}, E_{z} separiert werden und gelangt als zu messendes Multistrahlbündel 56 in Freistrahloptik über den strahlkombinierenden Strahlteiler 51 zusammen mit dem Referenzstrahl 57 auf das Intensitätssensorarray 1. Zur Amplituden und Phasenmessung wird ein dem Intensitätssensorarray 1 nachgeordneter Lock-in-Verstärker 59 benutzt, dessen Bezugsphase aus dem Scanmechanismus des oszillierenden Referenzspiegels 58 abgeleitet wird.

### Heterodyn-Detektion von Amplitude und Phase

Eine vierte Möglichkeit der Amplituden- und Phasenmessung ist durch das in Fig. 25 dargestellte Heterodyn-Interferometer gegeben. Der Laserstrahl wird wie bisher in Messstrahl und Referenzstrahl 57 am Strahlteiler 51 aufgeteilt. Beide Strahlen durchlaufen Frequenzschieber 53 und Polarisationssteuerungen 52 und werden in ihren Trägerfrequenzen mit unterschiedlichen Frequenzen f₁ und f₂ verschoben. Der Messstrahl wird - nachdem er das Messobjekt 54 passiert hat und als einfallendes Strahlungsbündel 55 auf das Feldvektor-Detektorarray 2 gelangt ist, dort wie nach den bisherigen Erläuterungen selektiv, in einzelne Feldvektorkomponenten Eₓ, E_{y}, E_{z} in ein zu messendes Multistrahlbündel 56 gewandelt, über den strahlkombinierenden Strahlteiler 51 auf das Intensitätssensorarray 1 übertragen. Dort wird er mit dem ebenfalls am strahlkombinierenden Strahlteiler 51 auf das Intensitätssensorarray 1 eingekoppelten Referenzstrahl 57 überlagert. Der dem Intensitätssensorarray 1 nachgeschaltete Lock-in-Verstärker 59 erhält die elektrischen Frequenzsignale f₁ und f₂ von den Frequenzschiebern 53 und detektiert Amplitude und Phase auf der Differenzfrequenz (f₁-f₂).

Mit der vorliegenden Erfindung ist es erstmalig möglich, von einem optischen System die Punktbildverwaschungsfunktion (PSF) als Vektorfeld aufzunehmen und deren Werte als Amplitude und Phase zu bestimmen sowie die Modulationsübertragungsfunktion (MTF) von optischen System zu bewerten. Mit der erfindungsgemäß gemessenen Vektor-PSF lassen sich deutlich genauere Informationen über die Charakteristiken und das Übertragungsverhalten von refraktiven und diffraktiven Linsen, komplexen optischen Systemen erhalten, insbesondere auch - aber nicht darauf beschränkt - von nichtsphärischen Optiken und tiefultravioletten (DUV-) und extremultravioletten (EUV-) Spiegeloptiken.

Die mit der erfindungsgemäßen Anordnung erhaltene Vektor-PSF enthält jede Feldvektorkomponente Eₓ, E_{y}, und E_{z} separat und zwar mit sechs Werten, drei für die Amplituden und drei für die Phasen. Außerdem ermöglicht die erfindungsgemäße Detektoranordnung die Vektor-PSF hochaufgelöst im Subwellenlängen- bis Nanometerbereich - soweit das derzeitig verfügbare Intensitätssenorarrays zulassen - über große Bildbereiche aufzunehmen, wodurch sich neue Horizonte für die Metrologie optischer Komponenten und optischer Systeme eröffnen. Insbesondere wird auch Effizienz der Optikmessung und -auswertung in polarisationsselektiver in als auch zeitlicher Hinsicht (technischer Durchsatz) erheblich verbessert. Normalerweise sind für die Charakterisierung dieser letztgenannten optischen Systeme stets mehrere Messverfahren und -techniken anzuwenden, während mit der erfindungsgemäßen Bestimmung der 3D-Verteilung der Vektor-PSF die Charakterisierung eines optischen Systems von beliebiger Konfiguration in einem einzigen Messzyklus bestimmt werden kann.

Des Weiteren können durch numerische Methoden des Reverse-Engineerings in der Photonik mit der dreidimensionalen Verteilung der Vektor-PSF hinreichende Informationen zur Rekonstruktion der Struktur und Geometrie von optische Systemen gewonnen werden.

Diese Mess- und Rekonstruktionsmethoden auf Basis der erfindungsgemäßen Messung der Vektor-PSF sind vor allem vorteilhaft für die Metrologie von asphärischen Linsen und Spiegeln, insbesondere für DUV- und EUV-Optiken. Auch wenn EUV-Reflexionsoptiken derzeit für Wellenlängenbereiche von 10 nm bis 130 nm konzipiert sind und falls in diesem Spektralbereich die Apizes von Detektorstrukturen 211, 212, 213 LPR haben, kann die erfindungsgemäße Feldvektor-Detektoranordnung trotzdem eingesetzt werden, indem die EUV-Komponenten mit Hilfe von größeren realisierbaren Messwellenlängen gemessen werden und danach auf den gewünschte Wellenlängenbereich umgerechnet werden, indem die Messergebnisse mit den Berechnungsergebnissen verglichen werden, mit denen die EUV-Komponenten konzipiert und entworfen wurden.

In einigen Fällen kann es schon ausreichend sein, nur Intensitätswerte der Vektor-PSF (als Intensitäten der Feldvektorkomponenten (ohne Phasen) zu messen, um Linsenoptiken und ihre Leistungsparameter zu charakterisieren und ihre Geometrie und Form zu rekonstruieren. In anderen Fällen, in denen optische Systeme detailliert, z.B. bezüglich Rauigkeit, optischer Beschichtungen, Multireflexionsverhalten etc., zu bewerten sind, wird dagegen die 3D-Verteilung der kompletten Vektor-PSF (mit Amplituden und Phasen der drei Feldvektorkomponenten Eₓ, E_{y} und E_{z}) erforderlich sein und die Vorteile der Erfindung vollständig zum Tragen kommen.

Eine weitere vorteilhafte Anwendung der Erfindung ergibt sich auf dem Gebiet der Mikrofluide. Hier kann das erfindungsgemäße Feldvektor-Detektorarray direkt in Mikrofluid-Kanäle integriert werden, um die Moleküle oder Partikel zu charakterisieren. Insbesondere können damit Polarisationsfähigkeit und Dipolmomente der Partikel und Moleküle bestimmt werden.

### Bezugszeichenliste

- 1: (zweidimensionales) Intensitätssensorarray
- 11: Sensorelement
- 12: Schutzschicht
- 13: Abstandshalter

- 2: Feldvektor-Detektorarray
- 21: Feldvektor-Detektorstruktur
- 211: (Eₓ-) Detektorstruktur
- 212: (E_{y}-) Detektorstruktur
- 213: (E_{z}-) Detektorstruktur
- 214: (E_{R}-) Referenzstruktur
- 215: (45°-) Detektorstruktur
- 216: (135°-) Detektorstruktur

- 22: Bereich (mit Detektorstruktur 211)
- 23: Bereich (mit Detektorstruktur 212)
- 24: Bereich (mit Detektorstruktur 213)
- 25: strukturfreier Bereich
- 26: Bereich (mit Referenzstruktur 214)
- 27: gemischter Strukturbereich
- 28: Substrat
- 29: strahlformendes optisches Array

- 3: (aperturlose) Spitze
- 31: Wellenleiter
- 32: Halbleiter
- 33: (aperturloser) Apex
- 34: axialsymmetrische Dämpfungsschicht
- 35: I/U-Wandler
- 36: Isolator

- 4: Spitze (mit Apertur)
- 41: Spitze (für Feldvektorkomponente Eₓ)
- 42: Spitze (für Feldvektorkomponente E_{y})
- 43: Apertur
- 431: Aperturbeschichtung

- 44: Apex (mit Apertur)/ (aperturtragender) Apex
- 45: (streifenförmige) Dämpfungsschicht
- 46: zusätzliche Dämpfungsschicht
- 47: Gitterstruktur
- 48: Metallstreifen
- 49: axialer Metalldraht

- 5: Detektionseinrichtung zur Phasenbestimmung
- 51: Strahlteiler
- 52: Polarisationssteuerung
- 53: Frequenzschieber
- 54: Messobjekt
- 55: einfallendes Strahlungsbündel
- 56: zu messendes Multistrahlbündel
- 57: Referenzstrahl
- 58: Referenzspiegel
- 59: Lock-in-Verstärker

- 6: Chopper

- Eₓ, E_{y}, E_{z}: Feldvektoren
- E_{R}: Referenzsignal (für Feldvektoren Eₓ, E_{y})

## Patentansprüche

1. Anordnung zur Detektion der Intensitätsverteilung von Komponenten des elektromagnetischen Feldes in Strahlungsbündeln, enthaltend
- ein hochauflösendes zweidimensionales Intensitätssensorarray (1),
- ein Feldvektor-Detektorarray (2), bestehend aus verschiedenen Bereichen (22, 23, 24, 25, 26) von Detektorstrukturen (21) mit mindestens drei individuellen Detektorstrukturen (211, 212, 213) für zwei individuelle transversale Feldvektorkomponenten Eₓ, E_{y} und eine longitudinale Feldvektorkomponente E_{z}, wobei
- die Detektorstrukturen (211, 212, 213) als einzelne Mikrostrukturen jeweils mindestens einem Sensorelement (11) des zweidimensionalen Intensitätssensorarrays (1) zugeordnet und im einfallenden Strahlenbündel (55) vor diesen angeordnet sind, **dadurch gekennzeichnet, dass**
- die Detektorstrukturen (211, 212, 213) metallische mantelförmige Spitzen (3, 4) mit unterschiedlichen Apizes (33, 44) als Nanostrukturen so ausgebildet sind, um aufgrund lokalisierter Plasmonenresonanz (LPR) der jeweiligen Nanostruktur der Detektorstrukturen (211, 212, 213) und durch LPR angeregter lokalisierter Oberflächenplasmonen (LSP) eine elektromagnetische Feldverteilung im einfallenden Strahlenbündel für eine Polarisationsselektion nach individuellen transversalen und longitudinalen Feldvektorkomponenten Eₓ, E_{y}, E_{z} zu nutzen und auf Basis des Fortschreitens von Oberflächenplasmonpolaritonen (SPP) und photonischer Wellenleitung (WGM) zu den zugeordneten Sensorelementen (11) des Intensitätssensorarrays (1) zu übertragen, wo lokalisierte Photonenstrahlenbündel als Intensitätssignale der Feldvektorkomponenten Eₓ, E_{y}, E_{z} aufnehmbar sind, wobei die Detektorstrukturen (213) für die individuellen longitudinalen Feldvektorkomponente E_{z} als konische aperturlose metallische Spitzen (3) ausgebildet sind und die Detektorstrukturen (211, 212) für die individuellen transversalen Feldvektorkomponenten Eₓ, E_{y} als unterschiedlich orientierte metallische Spitzen (4; 41, 42) mit einer Apertur (43) am Apex (44) ausgebildet sind, wobei eine Detektorstruktur (211) für die transversale Feldvektorkomponente Eₓ und eine Detektorstruktur (212) für die transversale Feldvektorkomponente E_{y} zueinander axial um 90° gedreht angeordnet sind.

2. Anordnung nach Anspruch 1, wobei die aperturlosen metallischen Spitzen (3) im Innenraum einen Wellenleiter (31) aus einem Dielektrikum oder Halbleiter aufweisen, um SPP zum WGM einzukoppeln und zum Sensorelement (11) zu transportieren.

3. Anordnung nach Anspruch 1, wobei die metallischen Spitzen (4; 41, 42) mit Apertur (43) am Apex (44) entweder
- zwei axialsymmetrisch an der Innenseite der metallischen Spitze (4; 41, 42) gegenüberliegende streifenförmige Dämpfungsschichten (45) zur Extinktion oder Schwächung der LSP und SPP und WGM für eine der transversalen Feldvektorkomponenten Eₓ, E_{y} aufweisen, die für die transversalen Feldvektorkomponenten Eₓ und E_{y} zueinander axial um 90° gedreht angeordnet sind, oder
- zylindrisch, konisch oder pyramidenförmig geformt sind, wobei sie kreisförmige oder elliptische, quadratische oder rechteckige Querschnitte aufweisen, und im Innenraum gegenüberliegende Wellenleiter (31) aus einem Dielektrikum oder Halbleiter (32) enthalten, die für die transversalen Feldvektorkomponenten Eₓ und E_{y} zueinander axial um 90° gedreht angeordnet sind, oder
- die Apertur (43) der metallischen Spitzen (4; 41, 42) kreisförmig, elliptisch oder rechteckig geformt ist, wobei bei einer schmalen bis spaltförmigen Ausformung die Längsausdehnungen der jeweiligen Aperturen (43) der Detektorstrukturen (211, 212) für die transversalen Feldvektorkomponenten Eₓ, E_{y} zueinander axial um 90° gedreht ausgerichtet sind.

4. Anordnung nach Anspruch 1, wobei an den Spitzen (4, 41, 42) mit Apertur (43) zwei zusätzliche Dämpfungsschichten (46) an einer ebenen Außenseite oder einer ebenen Innenseite des Apex (44) oder an einer Innenseite der Apertur (43) axialsymmetrisch gegenüberliegend angebracht sind oder an einer Grenzfläche der metallischen Spitze (4; 41, 42) mit einem Wellenleiter (31) in Streifenbereichen, die nicht mit den streifenförmigen Dämpfungsschichten (45) belegt sind, Gitterstrukturen (47) angebracht sind zur Verbesserung der Kopplung zwischen der LSP und der WGM und Kollimation derselben.

5. Anordnung nach Anspruch 1, wobei die verschiedenen Bereiche (22, 23, 24, 25, 26) von Detektorarraystrukturen (21) des Feldvektor-Detektorarrays (2) außer den mindestens drei individuellen Detektorstrukturen (211, 212, 213) mindestens einen Referenzbereich (25, 26) beinhalten und der mindestens eine Referenzbereich entweder ein von den individuellen Detektorstrukturen (211, 212, 213) strukturfreier Bereich (25) oder ein mit wenigstens einer Referenzstruktur (214) belegter Referenzbereich (26) ist, wobei die Referenzstruktur (214) als axialsymmetrische metallische Spitze (4) zylindrisch, konisch, pyramiden- oder quaderförmig geformt und mit einer axialsymmetrischen Apertur (43) in dem Apex (44) versehen ist und mit gleicher Höhe wie die individuellen Detektorstrukturen (211, 212, 213) ausgebildet sein kann.

6. Anordnung nach Anspruch 1, wobei das Feldvektor-Detektorarray (2) mit den Detektorstrukturen (211, 212, 213) direkt auf dem Intensitätssensorarray (1) über den Sensorelementen (11) monolithisch aufgebracht ist.

7. Anordnung nach Anspruch 6, wobei die metallischen mantelförmigen Spitzen (3, 4) der Detektorstrukturen (211, 212, 213) im Innenraum der Spitzen (3, 4) als Wellenleiter (31) einen Halbleiter (32) enthalten und das Intensitätssensorarray (1) als ein Schottky-Dioden-Array, das einen Metall-Halbleiter-Kontakt zwischen Metallmantel-Spitze und Halbleiter-Wellenleiter ausnutzt, ausgebildet ist.

8. Anordnung nach Anspruch 1, wobei das Feldvektor-Detektorarray (2) mit den Detektorstrukturen (211, 212, 213) auf einem separaten Substrat (28) gefertigt ist und entweder
- mit dem Intensitätssensorarray (1) mittels eines am Substrat (28) befindlichen strahlformenden optischen Arrays (29) mit den einzelnen Sensorelementen (11) des Intensitätssensorarrays (1) in Freistrahloptik optisch gekoppelt ist oder
- auf dem Feldvektor-Detektorarray (2) mit dem Substrat (28) vollflächig oder
- mit Abstandshaltern (13) und einem strahlformenden optischen Array (29) aufgebracht ist.

9. Anordnung nach Anspruch 8, wobei das strahlformende optische Array (29) refraktive Linsen, GRIN-Linsen, Metamateriallinsen, diffraktive optische Elemente oder strahlformende Mikro- oder Nanostrukturen aufweist.

10. Anordnung nach Anspruch 1, wobei eine definierte Anzahl von Spitzen (4; 41, 42) mit Apertur (43) gegenüber den Detektorstrukturen (211, 212) für die transversalen Feldvektorkomponenten Eₓ, E_{y} um ±45° gedreht angeordnet sind, um individuelle transversale Polarisationszustände im einfallenden Strahlenbündel unter Winkeln von 0°, 45°, 90° und 135° bestimmen zu können.

11. Anordnung nach Anspruch 8, wobei das Feldvektor-Detektorarray (2) und das Intensitätssensorarray (1) als räumlich getrennte Detektoranordnungen in einer Detektionseinrichtung (5) zur Ermittlung der Phasen der Feldvektorkomponenten Eₓ, E_{y}, E_{z} angeordnet sind.

12. Anordnung nach Anspruch 11, wobei das Feldvektor-Detektorarray (2) und das Intensitätssensorarray (1) in einer Zwei-Schritt-Amplituden-und-Phasen-Detektionsanordnung, in einer Heterodyn-Interferometeranordnung, in einer Quasi-Heterodyn-Interferometeranordnung oder in einer Homodyn-Interferometeranordnung integriert nach einem Messobjekt (54) angeordnet sind.

13. Anordnung nach Anspruch 1, wobei die Detektorstruktur (213) für die individuellen longitudinalen Feldvektorkomponenten (E_{z}) als eine konische aperturlose metallische Spitze (3) ausgebildet ist und im Innenraum ein Dielektrikum oder einen Isolator (36) sowie einen axial angeordneten Metalldraht (34) aus einem anderen Metall als die metallische Spitze (3) mit einer Kontaktstelle am aperturlosen Apex (33) aufweist, und so eine thermoelement-gekoppelte Spitze (3) als eine individuelle Detektorstruktur (211) für die eine longitudinale Feldvektorkomponente (E_{z}) darstellt.

14. Anordnung nach Anspruch 1, wobei die Detektorstrukturen (211, 212) für die individuellen transversalen Feldvektorkomponenten (Eₓ, E_{y}) als unterschiedlich orientierte, zylindrisch, konisch, pyramiden- oder quaderförmig geformte Spitzen (4; 41, 42) ausgebildet sind, wobei sie kreisförmige oder elliptische, quadratische oder rechteckige Querschnitte aufweisen, und ein Dielektrikum (32) oder einen Isolator (36) mit axialsymmetrisch gegenüberliegenden Metallstreifen (48) an der Mantelfläche sowie einen axial angeordneten Metalldraht (49) aus einem anderen Metall als die Metallstreifen (48) mit einer Kontaktstelle am Apex (44) durch verlängerte metallische Nanopartikel aufweisen, wobei die axialsymmetrisch gegenüberliegenden Metallstreifen (48) an der Mantelfläche der Detektorstrukturen (211, 212) für die transversalen Feldvektorkomponenten Eₓ und E_{y} zueinander axial um 90° gedreht angeordnet sind.

15. Anordnung nach Anspruch 1, wobei eine Scaneinrichtung zur ein-, zwei- oder dreidimensionalen Scanbewegung des Feldvektor-Detektorarray (2) relativ zum Strahlenbündel vorhanden ist, um die verschiedenen Bereiche (22, 23, 24, 25, 26) von Detektorstrukturen (21) für die drei individuellen Detektorstrukturen (211, 212, 213) so zu verschieben, dass jede der drei individuellen Detektorstrukturen (211, 212, 213) für die Feldvektorkomponenten Eₓ, E_{y}, E_{z} wenigstens einmal auf jeder Pixelposition eines im Strahlquerschnitt des einfallenden Strahlenbündels aufzunehmenden hochauflösenden zweidimensionalen Bildes positioniert ist.

16. Anordnung nach Anspruch 1, wobei das Intensitätssensorarray (1) als eine Sensormatrix für Photonendetektion, für Wärmedetektion oder für Hot-Carrier-Detektion ausgebildet und in einem optischen Rasternahfeldmikroskop (SNOM) eingesetzt ist zur parallelisierten Aufnahme von hochaufgelösten großflächig zweidimensionalen Probenbildern in drei Feldvektorkomponenten, um Dipolmoment-Orientierung von Molekülen auf fluiden oder festen Oberflächen zu bestimmen.

## Claims

1. A device for detecting the intensity distribution of components of the electromagnetic field in radiation beams, comprising
- a high-resolution two-dimensional intensity sensor array (1),
- a field vector detector array (2) consisting of different regions (22, 23, 24, 25, 26) of detector structures (21) with at least three individual detector structures (211, 212, 213) for two individual transverse field vector components Eₓ, E_{y} and one longitudinal field vector component E_{z}, wherein
- the detector structures (211, 212, 213) are each assigned as individual microstructures to at least one sensor element (11) of the two-dimensional intensity sensor array (1) and are arranged in front of these in the incident beam (55), **characterised in that**
- the detector structures (211, 212, 213) are metallic sheath-shaped tips (3, 4) with different apexes (33, 44) formed as nanostructures in such a way that, in order to use an electromagnetic field distribution in the incident beam for polarisation selection according to individual transverse and longitudinal field vector components Eₓ, E_{y}, E_{z}, due to localised plasmon resonance (LPR) of the respective nanostructure of the detector structures (211, 212, 213) and localised surface plasmons (LSP) excited by LPR, and to transmit it, on the basis of the progression of surface plasmon polaritons (SPP) and photonic waveguiding (WGM), to the associated sensor elements (11) of the intensity sensor array (1), where localised photon beams can be recorded as intensity signals of the field vector components Eₓ, E_{y}, E_{z}, wherein the detector structures (213) for the individual longitudinal field vector components E_{z} are configured as conical apertureless metallic tips (3) and the detector structures (211, 212) for the individual transverse field vector components Eₓ, E_{y} are configured as differently orientated metallic tips (4; 41, 42) with an aperture (43) at the apex (44), wherein a detector structure (211) for the transverse field vector component Eₓ and a detector structure (212) for the transverse field vector component E_{y} are arranged axially rotated by 90° relative to one another.

2. The device according to claim 1, wherein the apertureless metallic tips (3) have a waveguide (31) made of a dielectric or semiconductor in the interior in order to couple SPP for WGM and transport them to the sensor element (11).

3. The device according to claim 1, wherein the metallic tips (4; 41, 42) with aperture (43) at the apex (44) either
- comprise two strip-shaped attenuation layers (45), arranged axially symmetrically opposite one another on the inside of the metallic tip (4; 41, 42), for extinction or attenuation of the LSP and SPP and WGM for one of the transverse field vector components Eₓ, E_{y}, which are arranged axially rotated by 90° relative to one another for the transverse field vector components Eₓ and E_{y}, or
- are cylindrical, conical or pyramidal in shape, having circular or elliptical, square or rectangular cross-sections, and contain waveguides (31) of a dielectric or semiconductor (32) located opposite each other in the interior, which are arranged axially rotated by 90° relative to each other for the transverse field vector components Eₓ and E_{y}, or
- the aperture (43) of the metallic tips (4; 41, 42) is circular, elliptical or rectangular in shape, the longitudinal extensions of the respective apertures (43) of the detector structures (211, 212) for the transverse field vector components Eₓ, E_{y} being aligned axially rotated by 90° relative to one another in the case of a narrow to slit-shaped configuration.

4. The device according to claim 1, wherein two additional attenuation layers (46) are attached to the tips (4, 41, 42) with aperture (43) on a flat outer side or a flat inner side of the apex (44) or on an inner side of the aperture (43), axially symmetrically opposite one another, or grid structures (47) are attached to an interface of the metallic tip (4; 41, 42) with a waveguide (31) in strip regions which are not covered with the strip-shaped attenuation layers (45), in order to improve the coupling between the LSP and the WGM and collimation thereof.

5. The device according to claim 1, wherein the various regions (22, 23, 24, 25, 26) of detector array structures (21) of the field vector detector array (2) contain at least one reference region (25, 26) in addition to the at least three individual detector structures (211, 212, 213), and the at least one reference region is either a region (25) which is structurally free from the individual detector structures (211, 212, 213) or a reference region (26) which is occupied by at least one reference structure (214), wherein the reference structure (214) is formed as an axially symmetrical metallic tip (4) of cylindrical, conical, pyramidal or cuboidal shape and is provided with an axially symmetrical aperture (43) in the apex (44) and can be formed with the same height as the individual detector structures (211, 212, 213).

6. The device according to claim 1, wherein the field vector detector array (2) with the detector structures (211, 212, 213) is monolithically applied directly to the intensity sensor array (1) above the sensor elements (11).

7. The device according to claim 6, wherein the metallic sheath-shaped tips (3, 4) of the detector structures (211, 212, 213) contain a semiconductor (32) as waveguide (31) in the interior of the tips (3, 4) and the intensity sensor array (1) is configured as a Schottky diode array which utilises a metal-semiconductor contact between the metal sheath tip and the semiconductor waveguide.

8. The device according to claim 1, wherein the field vector detector array (2) with the detector structures (211, 212, 213) is fabricated on a separate substrate (28) and either
- is optically coupled to the intensity sensor array (1) by means of a beam-shaping optical array (29) located on the substrate (28) with the individual sensor elements (11) of the intensity sensor array (1) in free-beam optics, or
- is applied to the field vector detector array (2) with the substrate (28) over the entire surface
- or with spacers (13) and a beam-shaping optical array (29).

9. The device according to claim 8, wherein the beam-shaping optical array (29) comprises refractive lenses, GRIN lenses, metamaterial lenses, diffractive optical elements or beam-shaping micro- or nanostructures.

10. The device according to claim 1, wherein a defined number of tips (4; 41, 42) with aperture (43) are arranged rotated by ±45° relative to the detector structures (211, 212) for the transverse field vector components Eₓ, E_{y} in order to be able to determine individual transverse polarisation states in the incident beam at angles of 0°, 45°, 90° and 135°.

11. The device according to claim 8, wherein the field vector detector array (2) and the intensity sensor array (1) are arranged as spatially separated detector arrangements in a detection device (5) for determining the phases of the field vector components Eₓ, E_{y}, E_{z}.

12. The device according to claim 11, wherein the field vector detector array (2) and the intensity sensor array (1) are arranged in a manner integrated in a two-step amplitude-and-phase detection arrangement, in a heterodyne interferometer arrangement, in a quasi-heterodyne interferometer arrangement or in a homodyne interferometer arrangement downstream of a measurement object (54).

13. The device according to claim 1, wherein the detector structure (213) for the individual longitudinal field vector components (E_{z}) is configured as a conical apertureless metallic tip (3) and has a dielectric or an insulator (36) in the interior as well as an axially arranged metal wire (34) made of a metal other than the metallic tip (3) with a contact point at the apertureless apex (33), and thus represents a thermocouple-coupled tip (3) as an individual detector structure (211) for the one longitudinal field vector component (Ez).

14. The device according to claim 1, wherein the detector structures (211, 212) for the individual transverse field vector components (Eₓ, E_{y}) are formed as differently orientated, cylindrically, conically, pyramid- or cuboid-shaped tips (4; 41, 42), wherein they have circular or elliptical, square or rectangular cross-sections, and have a dielectric (32) or an insulator (36) with axially symmetrically opposite metal strips (48) on the lateral surface and an axially arranged metal wire (49) made of a metal other than the metal strips (48) with a contact point at the apex (44) by means of elongated metallic nanoparticles, wherein the axially symmetrically opposite metal strips (48) on the lateral surface of the detector structures (211, 212) for the transverse field vector components Eₓ and E_{y} are arranged axially rotated by 90° relative to one another.

15. The device according to claim 1, wherein a scanning means for one-, two- or three-dimensional scanning movement of the field vector detector array (2) relative to the beam is provided to move the different regions (22, 23, 24, 25, 26) of detector structures (21) for the three individual detector structures (211, 212, 213) so that each of the three individual detector structures (211, 212, 213) for the field vector components Eₓ, E_{y}, E_{z} is positioned at least once on each pixel position of a high-resolution two-dimensional image to be recorded in the beam cross-section of the incident beam.

16. The device according to claim 1, wherein the intensity sensor array (1) is configured as a sensor matrix for photon detection, for heat detection or for hot carrier detection and is used in a scanning near-field optical microscope (SNOM) for parallelised recording of high-resolution, large-area two-dimensional sample images in three field vector components in order to determine the dipole moment orientation of molecules on fluid or solid surfaces.

## Revendications

1. Dispositif pour la détection de la distribution des intensités des composantes du champ électromagnétique dans des faisceaux de rayonnement, comprenant
- un réseau bidimensionnel de capteurs d'intensité à haute résolution (1),
- un réseau de détecteurs de vecteurs de champ (2), constitué de différentes zones (22, 23, 24, 25, 26) de structures de détection (21) avec au moins trois structures de détection individuelles (211, 212, 213) pour deux composantes de vecteur de champ transversales individuelles Eₓ, E_{y} et une composante de vecteur de champ longitudinale E_{z}, où
- les structures de détection (211, 212, 213) sont associées en tant que microstructures individuelles respectivement à au moins un élément capteur (11) du réseau de capteurs d'intensité bidimensionnel (1) et sont disposées devant ceux-ci dans le faisceau de rayonnement incident (55),
**caractérisé en ce que**
- les structures de détection (211, 212, 213) sont des pointes métalliques en forme d'enveloppe (3, 4) avec des apex différents (33, 44) en tant que nanostructures de manière à utiliser, en raison de la résonance plasmonique localisée (LPR) de la nanostructure respective des structures de détection (211, 212, 213) et des plasmons de surface localisés (LSP) excités par LPR, une distribution de champ électromagnétique dans le faisceau de rayonnement incident pour une sélection de polarisation selon des composantes de vecteur de champ transversales et longitudinales individuelles Eₓ, E_{y}, E_{z}, et de la transmettre, sur la base de la progression des polaritons de plasmon de surface (SPP) et du guidage d'onde photonique (WGM), aux éléments capteurs associés (11) du réseau de capteurs d'intensité (1), où des faisceaux de photons localisés peuvent être enregistrés en tant que signaux d'intensité des composantes de vecteur de champ Eₓ, E_{y}, E_{z}, les structures de détection (213) pour les composantes de vecteur de champ longitudinales individuelles E_{z} étant conçues comme des pointes métalliques coniques sans ouverture (3) et les structures de détection (211, 212) pour les composantes de vecteur de champ transversales individuelles Eₓ, E_{y} étant conçues comme des pointes métalliques orientées différemment (4 ; 41, 42) avec une ouverture (43) à l'apex (44), une structure de détection (211) pour la composante de vecteur de champ transversal Eₓ et une structure de détection (212) pour la composante de vecteur de champ transversale E_{y} étant disposées avec une rotation axiale de 90° l'une par rapport à l'autre.

2. Dispositif selon la revendication 1, dans lequel les pointes métalliques sans ouverture (3) présentent dans l'espace intérieur un guide d'ondes (31) constitué d'un diélectrique ou d'un semi-conducteur, afin de coupler les SPP pour le WGM et de les transporter vers l'élément capteur (11).

3. Dispositif selon la revendication 1, dans lequel les pointes métalliques (4 ; 41, 42) avec ouverture (43) à l'apex (44)
- présentent deux couches d'atténuation (45) en forme de bandes, opposées et à symétrie axiale sur le côté intérieur de la pointe métallique (4 ; 41, 42), pour l'extinction ou l'affaiblissement des LSP et des SPP et du WGM pour l'une des composantes de vecteur de champ transversales Eₓ, E_{y}, qui sont disposées en étant tournées axialement de 90° l'une par rapport à l'autre pour les composantes de vecteur de champ transversales Eₓ et E_{y}, ou
- sont de forme cylindrique, conique ou pyramidale, présentant des sections transversales circulaires ou elliptiques, carrées ou rectangulaires, et contiennent dans l'espace intérieur des guides d'ondes (31) opposés, constitués d'un diélectrique ou d'un semi-conducteur (32), qui sont disposés en étant tournés axialement de 90° l'un par rapport à l'autre pour les composantes de vecteur de champ transversales Eₓ et E_{y}, ou
- l'ouverture (43) des pointes métalliques (4 ; 41, 42) est de forme circulaire, elliptique ou rectangulaire, les extensions longitudinales des ouvertures respectives (43) des structures de détection (211, 212) pour les composantes de vecteur de champ transversales Eₓ, E_{y} étant orientées axialement à 90° l'une par rapport à l'autre dans le cas d'une conformation étroite jusqu'à en forme de fente.

4. Dispositif selon la revendication 1, dans lequel deux couches d'atténuation supplémentaires (46) sont appliquées sur les pointes (4, 41, 42) avec ouverture (43) sur une face extérieure plane ou une face intérieure plane de l'apex (44) ou sur une face intérieure de l'ouverture (43) en étant opposées de manière axialement symétrique, ou sur une interface de la pointe métallique (4 ; 41, 42) avec un guide d'ondes (31), des structures de grille (47) sont appliquées dans des zones de bande qui ne sont pas occupées par les couches d'atténuation en forme de bande (45), afin d'améliorer le couplage entre les LSP et le WGM et la collimation de ceux-ci.

5. Dispositif selon la revendication 1, dans lequel les différentes zones (22, 23, 24, 25, 26) de structures de réseau de détecteurs (21) du réseau de détecteurs de vecteurs de champ (2) contiennent, outre les au moins trois structures de détection individuelles (211, 212, 213), au moins une zone de référence (25, 26) et ladite au moins une zone de référence est soit une zone (25) sans les structures de détection individuelles (211, 212, 213) ou une zone de référence (26) occupée par au moins une structure de référence (214), la structure de référence (214) étant formée en tant que pointe métallique (4) à symétrie axiale de forme cylindrique, conique, pyramidale ou parallélépipédique et étant pourvue d'une ouverture (43) à symétrie axiale dans l'apex (44) et pouvant être réalisée avec la même hauteur que les structures de détection individuelles (211, 212, 213).

6. Dispositif selon la revendication 1, dans lequel le réseau de détecteurs de vecteurs de champ (2) avec les structures de détection (211, 212, 213) est appliqué de manière monolithique directement sur le réseau de capteurs d'intensité (1) au-dessus des éléments capteurs (11).

7. Dispositif selon la revendication 6, dans lequel les pointes métalliques en forme de gaine (3, 4) des structures de détection (211, 212, 213) contiennent un semi-conducteur (32) dans l'espace intérieur des pointes (3, 4) en tant que guide d'ondes (31) et le réseau de capteurs d'intensité (1) est réalisé sous la forme d'un réseau de diodes Schottky qui exploite un contact métal-semi-conducteur entre la pointe à gaine métallique et le guide d'ondes semi-conducteur.

8. Dispositif selon la revendication 1, dans lequel le réseau de détecteurs de vecteurs de champ (2) avec les structures de détection (211, 212, 213) est fabriqué sur un substrat séparé (28) et soit
- est couplé optiquement avec le réseau de capteurs d'intensité (1) au moyen d'un réseau optique de formation de faisceau (29) se trouvant sur le substrat (28) avec les différents éléments capteurs (11) du réseau de capteurs d'intensité (1) en optique à faisceau libre ou
- est appliqué sur le réseau de détecteurs de vecteurs de champ (2) avec le substrat (28) sur toute la surface ou
- avec des entretoises (13) et un réseau optique de formation de faisceau (29).

9. Dispositif selon la revendication 8, dans lequel le réseau optique de formation de faisceau (29) comprend des lentilles réfractives, des lentilles GRIN, des lentilles à métamatériaux, des éléments optiques diffractifs ou des microstructures ou nanostructures de formation de faisceau.

10. Dispositif selon la revendication 1, dans lequel un nombre défini de pointes (4 ; 41, 42) avec ouverture (43) sont disposées avec une rotation de ±45° par rapport aux structures de détection (211, 212) pour les composantes de vecteur de champ transversales Eₓ, E_{y}, afin de pouvoir déterminer des états de polarisation transversale individuels dans le faisceau de rayonnement incident sous des angles de 0°, 45°, 90° et 135°.

11. Dispositif selon la revendication 8, dans lequel le réseau de détecteurs de vecteurs de champ (2) et le réseau de capteurs d'intensité (1) sont disposés en tant que réseaux de détecteurs spatialement séparés dans un dispositif de détection (5) pour déterminer les phases des composantes de vecteur de champ Eₓ, E_{y}, E_{z}.

12. Dispositif selon la revendication 11, dans lequel le réseau de détecteurs de vecteurs de champ (2) et le réseau de capteurs d'intensité (1) sont disposés de manière intégré dans un dispositif de détection d'amplitude et de phase en deux étapes, dans un dispositif d'interféromètre hétérodyne, dans un dispositif d'interféromètre quasi-hétérodyne ou dans un dispositif d'interféromètre homodyne après un objet de mesure (54).

13. Dispositif selon la revendication 1, dans lequel la structure de détection (213) pour les composantes de vecteur de champ longitudinales individuelles (E_{z}) est réalisée sous la forme d'une pointe métallique conique sans ouverture (3) et présente dans l'espace intérieur un diélectrique ou un isolant (36) ainsi qu'un fil métallique (34) disposé axialement en un autre métal que la pointe métallique (3) avec un point de contact à l'apex sans ouverture (33), et constitue ainsi une pointe (3) couplée à un thermocouple en tant que structure de détection individuelle (211) pour l'une des composantes de vecteur de champ longitudinales (E_{z}).

14. Dispositif selon la revendication 1, dans lequel les structures de détection (211, 212) pour les composantes de vecteur de champ transversales individuelles (Eₓ, E_{y}) se présentent sous la forme de pointes orientées différemment, cylindriques, coniques, pyramidales ou parallélépipédiques (4 ; 41, 42), présentant des sections transversales circulaires ou elliptiques, carrées ou rectangulaires, et comprenant un diélectrique (32) ou un isolant (36) avec des bandes métalliques (48) opposées à symétrie axiale sur la surface d'enveloppe, ainsi qu'un fil métallique (49) disposé axialement et constitué d'un autre métal que les bandes métalliques (48), avec un point de contact à l'apex (44) par des nanoparticules métalliques allongées, les bandes métalliques (48) opposées à symétrie axiale étant disposées sur la surface d'enveloppe des structures de détection (211, 212) pour les composantes de vecteur de champ transversales Eₓ et E_{y}, tournées axialement de 90° les unes par rapport aux autres.

15. Dispositif selon la revendication 1, dans lequel un dispositif de balayage est présent pour le déplacement de balayage uni-, bi- ou tridimensionnel du réseau de détecteurs de vecteurs de champ (2) par rapport au faisceau de rayonnement, afin de déplacer les différentes zones (22, 23, 24, 25, 26) de structures de détection (21) pour les trois structures de détection individuelles (211, 212, 213) de manière à ce que chacune des trois structures de détection individuelles (211, 212, 213) pour les composantes de vecteur de champ Eₓ, E_{y}, E_{z} soit positionnée au moins une fois sur chaque position de pixel d'une image bidimensionnelle à haute résolution à enregistrer dans la section transversale du faisceau de rayonnement incident.

16. Dispositif selon la revendication 1, dans lequel le réseau de capteurs d'intensité (1) est conçu comme une matrice de capteurs pour la détection de photons, pour la détection de chaleur ou pour la détection de porteuses chaudes et est utilisé dans un microscope optique à champ proche à balayage (SNOM) pour l'enregistrement parallélisé d'images d'échantillons bidimensionnelles de grande surface à haute résolution dans trois composantes de vecteur de champ, afin de déterminer l'orientation du moment dipolaire de molécules sur des surfaces fluides ou solides.
